# EUROPÄISCHE PATENTSCHRIFT

(11) **EP 1 829 922 B1**
(45) Veröffentlichungstag und Bekanntmachung des Hinweises auf die Patenterteilung: **04.03.2009**
(21) Anmeldenummer: 07101298.3
(22) Anmeldetag: 29.01.2007
(51) Int. Cl.: C08K 5/54

(54) **Kautschukmischungen**
Latex compositions
Compositions de caoutchouc

(30) Priorität: 24.02.2006 DE 102006008670
(43) Veröffentlichungstag der Anmeldung: 05.09.2007
(73) Patentinhaber: Evonik Degussa GmbH, 45128 Essen (DE)
(72) Erfinder: Korth, Karsten, Dr., 79639, Grenzach-Wyhlen (DE); Hasse, Andre, 52441, Linnich-Ederen (DE); Albert, Philipp, Dr., 79539, Lörrach (DE); Klockmann, Oliver, 52382, Niederzier (DE)

(56) Entgegenhaltungen:
- EP-A1- 0 994 150

## Beschreibung

Die Erfindung betrifft Kautschukmischungen, Verfahren zu ihrer Herstellung, sowie ihre Verwendung.

Es ist bekannt, Silane als Haftvermittler einzusetzen. So werden Aminoalkyltrialkoxysilane, Methacryloxyalkyltrialkoxysilane, Polysulfanalkyltrialkoxysilane und Mercaptoalkyltrialkoxysilane als Haftvermittler zwischen anorganischen Materialen und organischen Polymeren, als Vernetzungsmittel und Oberflächenmodifizierungsmittel eingesetzt.

Diese Haftvermittler beziehungsweise Kupplungs- oder Verbindungsagenzien bilden sowohl zum Füllstoff als auch zum Elastomer Bindungen und bewirken somit zwischen der Füllstoffoberfläche und dem Elastomer eine gute Wechselwirkung.

Desweiteren ist bekannt, daß die Verwendung von handelsüblichen Silanhaftvermittlern (DE 22 55 577)mit drei Alkoxysubstituenten am Siliciumatom zur Freisetzung beträchtlicher Mengen an Alkohol während und nach der Anbindung an den Füllstoff führt. Da in der Regel Trimethoxy- und Triethoxy-substituierte Silane eingesetzt werden, werden die entsprechenden Alkohole, Methanol und Ethanol, in erheblichen Mengen freigesetzt.

Es ist weiterhin bekannt, daß Methoxy- und Ethoxysubstituierte Silane reaktiver sind als die entsprechenden langkettigen Alkoxy-substituierten Silane und somit schneller an den Füllstoff anbinden können, so daß auf den Einsatz von Methoxy- und Ethoxy-Substituenten aus technischer und wirtschaftlicher Sicht bisher nicht verzichtet werden konnte.

Aus EP 1285926 sind Organosiliciumverbindungen der allgemeinen Formeln 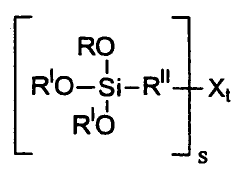 oder 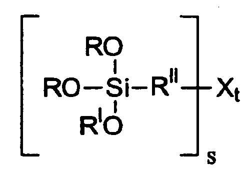 bekannt, wobei R eine Methyl- oder Ethyl-Gruppe ist,
R^{I} gleich oder verschieden und eine C₉-C₃₀ verzweigte oder unverzweigte einbindige Alkyl- oder Alkenyl-Gruppe, Arylgruppe, Aralkylgruppe, verzweigte oder unverzweigte C₂-C₃₀ Alkylethergruppe, verzweigte oder unverzweigte C₂-C₃₀ Alkylpolyethergruppe ist,
X ist NH(₃₋ₛ), O(C=O)-R^{III}, SH, S, S(C=O)-R^{III} oder H.

Ferner sind aus JP 2002145890 Verbindungen der allgemeinen Formel [[(R¹O-)(R²-O-)ₙ]ₚ-R³₃₋ₚSi-R⁴]₂-Sₘ bekannt.

Aus EP1609516 ist ein Verfahren zur Extraktion von Stoffen aus silanmodifizierten Füllstoffen bekannt. Die Silane zur Modifizierung können Verbindungen der Formel Z-A-Sₓ-A-Z sein.

Aus DE 102005020536.4 und DE 102005020534.8 sind Verfahren zur Herstellung von Mercaptoorganyl(alkoxysilanen)bekannt.

Aus EP 099 4150 sind Kautschukmischungen enthaltend Styrol-Butadien-Kautschuk und ein Organosilandisulfid bekannt.

Nachteil der bekannten enthaltend ein Organo(alkylpolyethersilan)ist die geringe Bruchdehnung.

Aufgabe der vorliegenden Erfindung ist es, Kautschukmischungen zur Verfügung zu stellen, die zusätzlich zu der reduzierten Emission von Alkohol während des Mischprozesses eine verbesserte Bruchdehnung aufweisen.

Gegenstand der Erfindung sind Kautschukmischungen, enthaltend
(A) mindestens einen Styrol-Butadien-Kautschuk,
(B) mindestens einen Füllstoff und
(C) mindestens ein polysulfidisches Organo(alkylpolyethersilan)der allgemeinen Formel I

   [(X)(X')(X-)Si-R']₂-Sₘ I,
   wobei
   X eine Alkylpolyethergruppe O-((CR^{II}₂)_{w}-O-)ₜ Alk mit 14 - 29, vorzugsweise 16 bis 27, besonders bevorzugt 18 bis 25, ganz besonders bevorzugt 19 bis 23, Kohlenstoffatomen, vorzugsweise O-(CH₂-CH₂-O-)ₜ Alk, O-(CH(CH₃)-CH₂-O-)ₜ-Alk, O-(CH₂-CH₂-CH₂-CH₂-O-)ₜ Alk oder(CH₂-CH(CH₃)-CH₂-O)ₜ Alk, ist, mit
      t = 2-9 , bevorzugt 3-9, besonders bevorzugt 4-9, ganz besonders bevorzugt 5-9, außerordentlich bevorzugt 5-6,
      w = 2-9, bevorzugt 3-9, besonders bevorzugt 4-9, ganz besonders bevorzugt 4-8,
   R^{II} unabhängig voneinander H, eine Phenyl- oder eine Alkylgruppe, vorzugsweise eine C₁-C₁₁ Alkylgruppe, besonders bevorzugt eine CH₃- oder CH₃-CH₂-Gruppe, ist,
   Alk eine verzweigte oder unverzweigte, gesättigte oder ungesättigte, aliphatische, aromatische oder gemischt aliphatische /aromatische einbindige C₁₀-C₂₅ -, bevorzugt C₁₀-C₁₉ -, besonders bevorzugt C₁₁-C₁₈-, ganz besonders bevorzugt C₁₂ -C₁₇ -, außerordentlich bevorzugt C₁₃-C₁₇-, Kohlenwasserstoffgruppe ist,
   X' ein verzweigtes oder unverzweigtes Alkyl, bevorzugt C₁-C₁₈ Alkyl-,besonders bevorzugt -CH₃, -CH₂-CH₃, -CH(CH₃)-CH₃,-CH₂-CH₂-CH₃ oder C₄-C₁₅- Alkyl,
   ein verzweigtes oder unverzweigtes Alkoxy, bevorzugt C₁-C₁₈ Alkoxy-, besonders bevorzugt -OCH₃, -OCH₂-CH₃, -OCH(CH₃)-CH₃, -OCH₂-CH₂-CH₃, -OC₁₂H₂₅, -OC₁₃H₂₇, -OC₁₄H₂₉ oder C₁₅-C₁₈ Alkoxy, ein verzweigtes oder unverzweigtes C₂-C₂₅ Alkenyloxy-, vorzugsweise C₄-C₂₀ Alkenyloxy, besonders bevorzugt C₆ bis C₁₈ Alkenyloxy,
   ein C₆-C₃₅ Aryloxy-, vorzugsweise C₉-C₃₀ Aryloxy, besonders bevorzugt Phenyloxy(-OC₆H₅)oder C₉ bis C₁₈ Aryloxy,
   eine verzweigte oder unverzweigte C₇-C₃₅ Alkylaryloxygruppe, vorzugsweise C₉-C₃₀ Alkylaryloxygruppe, besonders bevorzugt Benzyloxy-, (-O-CH₂-C₆H₅) oder -O-CH₂-CH₂-C₆H₅,
   eine verzweigte oder unverzweigte C₇-C₃₅ Aralkyloxygruppe, vorzugsweise C₉-C₂₅ Aralkyloxygruppe, besonders bevorzugt Tolyloxy (-O-C₆H₄-CH₃) oder eine C₉ bis C₁₈ Aralkyloxygruppe, oder ein X ist,
   X" ein verzweigtes oder unverzweigtes Alkyl, bevorzugt C₁-C₁₈ Alkyl-,besonders bevorzugt CH₃, CH₂-CH₃, CH(CH₃)-CH₃, CH₂-CH₂-CH₃ oder C₄-C₁₅- Alkyl,
   ein verzweigtes oder unverzweigtes Alkoxy, bevorzugt C₁-C₁₈ Alkoxy-, besonders bevorzugt -OCH₃, -OCH₂-CH₃, -OCH(CH₃)-CH₃, -OCH₂-CH₂-CH₃ oder C₄-C₁₅ Alkoxy,
   ein C₂-C₂₅ Alkenyloxy-, vorzugsweise C₄-C₂₀ Alkenyloxy, besonders bevorzugt C₆ bis C₁₈ Alkenyloxy,
   ein C₆-C₃₅ Aryloxy-, vorzugsweise C₉-C₃₀ Aryloxy, besonders bevorzugt Phenyloxy (-OC₆H₅) oder C₉ bis C₁₈ Aryloxy,
   eine verzweigte oder unverzweigte C₇-C₃₅ Alkylaryloxygruppe, vorzugsweise C₉-C₃₀ Alkylaryloxygruppe, besonders bevorzugt Benzyloxy-, (-O-CH₂-C₆H₅) oder -O-CH₂-CH₂-C₆H₅,
   eine verzweigte oder unverzweigte C₇-C₃₅ Aralkyloxygruppe, vorzugsweise C₉-C₂₅ Aralkyloxygruppe, besonders bevorzugt Tolyloxy (-O-C₆H₄-CH₃) oder eine C₉ bis C₁₈ Aralkyloxygruppe, oder ein X ist,
   R^{I} eine verzweigte oder unverzweigte, gesättigte oder ungesättigte, aliphatische, aromatische oder gemischt aliphatische /aromatische zweibindige C₁-C₃₀ Kohlenwasserstoffgruppe, die gegebenenfalls substituiert ist,
   m gleich 1-12, bevorzugt 1,5-8, besonders bevorzugt 1,8-4, ist.
   R^{I} kann -CH₂-, -CH₂CH₂-, -CH₂CH₂CH₂-, -CH₂CH₂CH₂CH₂-, -CH(CH₃)-, -CH₂CH(CH₃)-, -CH(CH₃)CH₂-, -C(CH₃)₂-, -CH(C₂H₅)-, -CH₂CH₂CH(CH₃)-, -CH₂(CH₃)CH₂CH₂-, -CH₂CH(CH₃)CH₂-, -CH₂CH₂CH₂CH₂CH₂-, -CH₂CH₂CH₂CH₂CH₂CH₂-, -CH₂CH₂CH₂CH₂CH₂CH₂CH₂-, -CH₂CH₂CH₂CH₂CH₂CH₂CH₂CH₂-, -CH₂CH₂CH₂CH₂CH₂CH₂CH₂CH₂CH₂-, -CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂CH₂CH₂CH₂CH₂- oder 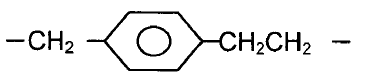 bedeuten.

Besonders bevorzugt können polysulfidische Organo(alkylpolyethersilane)der allgemeinen Formel I Substanzgemische aus Verbindungen der allgemeinen Formel I mit m gleich 1,8-2,8 und 3,0-3,9 sein.

Für X' und X" gleich (CH₃O-) oder (C₂H₅-O-) kann X bevorzugt O-(CH₂-CH₂-O-)ₜ Alk oder O-(CH(CH₃)-CH₂-O-)ₜ-Alk sein, mit t = 2-9, bevorzugt 3-9, besonders bevorzugt 4-9, ganz besonders bevorzugt 5-9.

Für X' gleich X und X" gleich (CH₃O-) oder (C₂H₅-O-) kann X bevorzugt O-(CH₂-CH₂-O-)ₜ Alk oder O-(CH(CH₃)-CH₂-O-)ₜ-Alk sein, mit t = 2-9, bevorzugt 3-9, besonders bevorzugt 4-9, ganz besonders bevorzugt 5-9.

Für X' und X" gleich X kann X bevorzugt O-(CH₂-CH₂-O-)ₜ Alk oder O-(CH(CH₃)-CH₂-O-)ₜ-Alk sein, mit t = 2-9, bevorzugt 3-9, besonders bevorzugt 4-9, ganz besonders bevorzugt 5-9.

Für X' gleich X und X" gleich ein Alkyl mit 1 bis 6 C-Atomen kann t = 3-9, bevorzugt 4-9, besonders bevorzugt 5-9, ganz besonders bevorzugt 6-9, außerordentlich bevorzugt 7-9, sein.
Für X' und X" gleich ein Alkyl mit 1 bis 6 C-Atomen kann t = 3-9, bevorzugt 4-9, besonders bevorzugt 5-9, ganz besonders bevorzugt 6-9, außerordentlich bevorzugt 7-9, sein.

In Formel I kann X ein alkoxyliertes Ricinusöl (z.B. CAS 61791-12-6) sein.

In Formel I kann X ein alkoxyliertes Oleylamin (z.B. CAS 26635-93-8) sein.

Verbindungen mit m = 1 können in Verbindungsgemischen von polysulfidischen Organo(alyklpolyethersilanen) der allgemeinen Formel I zu 0,01 bis 20 Gew.-%, bevorzugt von 0,1 bis 15 Gew.-%, besonders bevorzugt von 0,1 bis 10 Gew.-%, ganz besonders bevorzugt von 2 bis 8 Gew.-%, enthalten sein.

Die Alkylpolyethergruppe O-((CR^{II}₂)_{w}-O-)ₜ Alk kann Ethylenoxid-(CH₂-CH₂-O), Propylenoxid-, beispielsweise (CH(CH₃)-CH₂-O) oder (CH₂-CH(CH₃)-O), oder Butylenoxideinheiten, beispielsweise(-CH₂-CH₂-CH₂-CH₂-), (-CH(CH₂-CH₃)-CH₂-O) oder (-CH₂-CH(CH₂-CH₃)-O), enthalten.

Die Alkylpolyethergruppe O-(CR^{II}₂-CR^{II}₂-O)ₜ kann bevorzugt sein:
O-(-CH₂-CH₂-O-)**ₐ**,
O-(-CH(CH₃)-CH₂-O-)**ₐ**,
O-(-CH₂-CH(CH₃)-O-)**ₐ**,
O-(-CH₂-CH₂-O-)**ₐ**(-CH(CH₃)-CH₂-O-),
O-(-CH₂-CH₂-O-)(-CH(CH₃)-CH₂-O-)**ₐ**,
O-(-CH₂-CH₂-O-)**ₐ**(-CH₂-CH(CH₃)-O-),
O-(-CH₂-CH₂-O-)(-CH₂-CH(CH₃)-O-)**ₐ**,
O-(-CH(CH₃)-CH₂-O-)ₐ(-CH₂-CH(CH₃)-O-),
O-(-CH(CH₃)-CH₂-O-)(-CH₂-CH(CH₃)-O-)**ₐ**,
O -(-CH₂-CH₂-O-)**ₐ**(-CH(CH₃)-CH₂-O-)**_{b}**(-CH₂-CH(CH₃)-O-)**_{c}** oder Kombination miteinander,
wobei a + b + c = t ist.

Die Indexe a, b und c sind ganze Zahlen und bezeichnen die Anzahl der Wiederholeinheiten.

Die Alkylpolyethergruppe O-(CR^{II}₂-CR^{II}₂-O)ₜ-Alk kann
O-(CH₂-CH₂O)₂-C₁₀H₂₁, O-(CH₂-CH₂O)₃-C₁₀H₂₁, O-(CH₂-CH₂O)₄-C₁₀H₂₁, O-(CH₂-CH₂O)₅-C₁₀H₂₁, O-(CH₂-CH₂O)₆-C₁₀H₂₁, O-(CH₂-CH₂O)₇-C₁₀H₂₁, O-(CH(CH₃)-CH₂O)₂-C₁₀H₂₁, O-(CH(CH₃)-CH₂O)₃-C₁₀H₂₁, O-(CH(CH₃)-CH₂O)₄-C₁₀H₂₁, O-(CH(CH₃)-CH₂O)₅-C₁₀H₂₁, O-(CH(CH₃)-CH₂O)₆-C₁₀H₂₁,
O-(CH₂-CH₂O)₂-C₁₁H₂₃, O-(CH₂-CH₂O)₃-C₁₁H₂₃, O-(CH₂-CH₂O)₄-C₁₁H₂₃, O-(CH₂-CH₂O)₅-C₁₁H₂₃, O-(CH₂-CH₂O)₆-C₁₁H₂₃, O-(CH₂-CH₂O)₇-C₁₁H₂₃, O-(CH(CH₃)-CH₂O)₂-C₁₁H₂₃, O-(CH(CH₃)-CH₂O)₃-C₁₁H₂₃, O-(CH(CH₃)-CH₂O)₄-C₁₁H₂₃, O-(CH(CH₃)-CH₂O)₅-C₁₁H₂₃, O-(CH(CH₃)-CH₂O)₆-C₁₁H₂₃,
O-(CH₂-CH₂O)₂-C₁₂H₂₅, O-(CH₂-CH₂O)₃-C₁₂H₂₅, O-(CH₂-CH₂O)₄-C₁₂H₂₅, O-(CH₂-CH₂O)₅-C₁₂H_{25,} O-(CH₂-CH₂O)₆-C₁₂H_{25,} O-(CH₂-CH₂O)₇-C₁₂H_{25,} O-(CH(CH₃)-CH₂O)₂-C₁₂H_{25,} O-(CH(CH₃)-CH₂O)₃-C₁₂H_{25,} O-(CH(CH₃)-CH₂O)₄-C₁₂H_{25,} O-(CH(CH₃)-CH₂O)₅-C₁₂H_{25,}
O-(CH₂-CH₂O)₂-C₁₃H₂₇, O-(CH₂-CH₂O)₃-C₁₃H₂₇, O-(CH₂-CH₂O)₄-C₁₃H₂₇, O-(CH₂-CH₂O)₅-C₁₃H₂₇, O-(CH₂-CH₂O)₆-C₁₃H₂₇, O-(CH₂-CH₂O)₇-C₁₃H₂₇, O-(CH(CH₃)-CH₂O)₂-C₁₃H₂₇, O-(CH(CH₃)-CH₂O)₃-C₁₃H₂₇, O-(CH(CH₃)-CH₂O)₄-C₁₃H₂₇, O-(CH(CH₃)-CH₂O)₅-C₁₃H₂₇,
O-(CH₂-CH₂O)₂-C₁₄H₂₉, O-(CH₂-CH₂O)₃-C₁₄H₂₉, O-(CH₂-CH₂O)₄-C₁₄H₂₉, O-(CH₂-CH₂O)₅-C₁₄H₂₉, O-(CH₂-CH₂O)₆-C₁₄H₂₉, O-(CH₂-CH₂O)₇-C₁₄H₂₉, O-(CH(CH₃)-CH₂O)₂-C₁₄H₂₉, O-(CH(CH₃)-CH₂O)₃-C₁₄H₂₉, O-(CH(CH₃)-CH₂O)₄-C₁₄H₂₉, O-(CH(CH₃)-CH₂O)₅-C₁₄H₂₉,
O-(CH₂-CH₂O)₂-C₁₅H₃₁, O-(CH₂-CH₂O)₃-C₁₅H₃₁, O-(CH₂-CH₂O)₄-C₁₅H₃₁, O-(CH₂-CH₂O)₅-C₁₅H₃₁, O-(CH₂-CH₂O)₆-C₁₅H₃₁, O-(CH₂-CH₂O)₇-C₁₅H₃₁, O-(CH(CH₃)-CH₂O)₂-C₁₅H₃₁, O-(CH(CH₃)-CH₂O)₄-C₁₅H₃₁,
O-(CH₂-CH₂O)₂-C₁₆H₃₃, O-(CH₂-CH₂O)₃-C₁₆H₃₃, O-(CH₂-CH₂O)₄-C₁₆H₃₃, O-(CH₂-CH₂O)₅-C₁₆H₃₃, O-(CH₂-CH₂O)6-C₁₆H₃₃, O-(CH(CH₃)-CH₂O)₂-C₁₆H₃₃, O-( CH(CH₃)-CH₂O)₃-C₁₆H₃₃, O-(CH(CH₃)-CH₂O)₄-C₁₆H₃₃,
O-(CH₂-CH₂O)₂-C₁₇H₃₅, O-(CH₂-CH₂O)₃--C₁₇H₃₅, O-(CH₂-CH₂O)4-C₁₇H₃₅, O-(CH₂-CH₂O)₅-C₁₇H₃₅, O-(CH₂-CH₂O)₆-C₁₇H₃₅, O-(CH(CH₃)-CH₂O)₂-C₁₇H₃₅, O-(CH(CH₃)-CH₂O)₃-C₁₇H₃₅, O-(CH(CH₃)-CH₂O)4-C₁₇H₃₅,
O-(CH₂-CH₂O)₂-C₁₈H₃₇, O-(CH₂-CH₂O)₃-C₁₈H₃₇, O-(CH₂-CH₂O)₄-C₁₈H₃₇, O-(CH₂-CH₂O)₅-C₁₈H₃₇, O-(CH(CH₃)-CH₂O)₂-C₁₈H₃₇, O-(CH(CH₃)-CH₂O)₃-C₁₈H₃₇,
O-(CH₂-CH₂O)₂-C₆H₄-C₉H₁₉, O-(CH₂-CH₂O)₃-C₆H₄-C₉H₁₉, O-(CH₂-CH₂O)₄--C₆H₄-C₉H₁₉, O-(CH₂-CH₂O)₅-C₆H₄-C₉H₁₉, O-(CH₂-CH₂O)₆-C₆H₄-C₉H₁₉, O-(CH₂-CH₂O)₇-C₆H₄-C₉H₁₉, O-(CH(CH₃)-CH₂O)₂-C₆H₄-C₉H₁₉, O-(CH(CH₃)-CH₂O)₃-C₆H₄-C₉H₁₉, O-(CH(CH₃)-CH₂O)₄-C₆H₄-C₉H₁₉ sein.

Die Alkylpolyethergruppe O-(CR^{II}₂-CR^{II}₂-O)ₜ-Alk kann für t = 5, R^{II} = H und Alk gleich C13 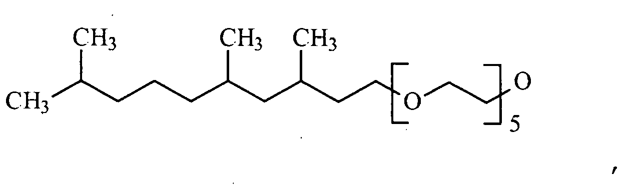 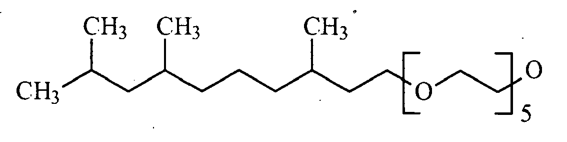 oder 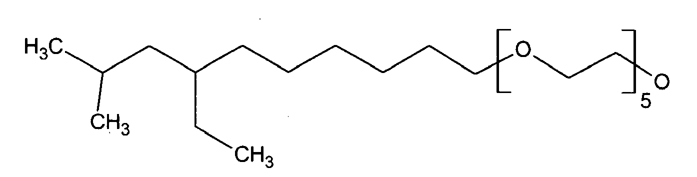 sein.

Die mittlere Verzweigungszahl der Kohlenstoffkette Alk kann 1 bis 5, vorzugsweise 1,2 bis 4, sein. Die mittlere Verzweigungszahl ist dabei definiert als die (Anzahl der CH₃-Gruppen)-1 .

Bevorzugte Verbindungen der allgemeinen Formel I können sein:
[[C₁₀H₂₁O-(CH₂-CH₂O)₂](Me)(EtO)Si(CH₂)₃] ₂Sₘ,
   [[C₁₀H₂₁O-(CH₂-CH₂O)₃](Me)(EtO)Si(CH₂)₃] ₂Sₘ,
   [[C₁₀H₂₁O-(CH₂-CH₂O)₄](Me)(EtO)Si(CH₂)₃] ₂Sₘ,
   [[C₁₀H₂₁O-(CH₂-CH₂O)₅](Me)(EtO)Si(CH₂)₃] ₂Sₘ,
   [[C₁₀H₂₁O-(CH₂-CH₂O)₆](Me)(EtO)Si(CH₂)₃] ₂Sₘ,
[[C₁₁H₂₃O-(CH₂-CH₂O)₂](Me)(EtO)Si(CH₂)₃] ₂Sₘ,
   [[C₁₁H₂₃O-(CH₂-CH₂O)₃](Me)(EtO)Si(CH₂)₃] ₂Sₘ,
   [[C₁₁H₂₃O-(CH₂-CH₂O)₄](Me)(EtO)Si(CH₂)₃] ₂Sₘ,
   [[C₁₁H₂₃O-(CH₂-CH₂O)₅](Me)(EtO)Si(CH₂)₃] ₂Sₘ,
   [[C₁₁H₂₃O-(CH₂-CH₂O)₆](Me)(EtO)Si(CH₂)₃] ₂Sₘ,

[[C₁₂H₂₅O-(CH₂-CH₂O)₃] (Me) (EtO)Si(CH₂)₃]₂Sₘ,
[[C₁₂H₂₅O-(CH₂-CH₂O)₂](Me)(EtO)Si(CH₂)₃]₂Sₘ,
[[C₁₂H₂₅O-(CH₂-CH₂O)₄] (Me) (EtO)Si(CH₂)₃]₂Sₘ,
[[C₁₂H₂₅O-(CH₂-CH₂O)₅] (Me) (EtO)Si(CH₂)₃]₂Sₘ,
[[C₁₂H₂₅O-(CH₂-CH₂O)₆] (Me) (EtO)Si(CH₂)₃]₂Sₘ,

[[C₁₃H₂₇O-(CH₂-CH₂O)₂] (Me) (EtO)Si(CH₂)₃]₂Sₘ,
[[C₁₃H₂₇O-(CH₂-CH₂O)₃] (Me) (EtO)Si(CH₂)₃]₂Sₘ,
[[C₁₃H₂₇O-(CH₂-CH₂O)₄] (Me) (EtO)Si(CH₂)₃]₂Sₘ,
[[C₁₃H₂₇O-(CH₂-CH₂O)₅] (Me) (EtO)Si(CH₂)₃]₂Sₘ,
[[C₁₃H₂₇O-(CH₂-CH₂O)₆] (Me) (EtO)Si(CH₂)₃]₂Sₘ,

[[C₁₄H₂₉O-(CH₂-CH₂O)₂] (Me) (EtO)Si(CH₂)₃]₂Sₘ,
[[C₁₄H₂₉O-(CH₂-CH₂O)₃] (Me) (EtO)Si(CH₂)₃]₂Sₘ,
[[C₁₄H₂₉O-(CH₂-CH₂O)₄] (Me) (EtO)Si(CH₂)₃]₂Sₘ,
[[C₁₄H₂₉O-(CH₂-CH₂O)₅] (Me) (EtO)Si(CH₂)₃]₂Sₘ,
[[C₁₄H₂₉O-(CH₂-CH₂O)₆] (Me) (EtO)Si(CH₂)₃]₂Sₘ,

[[C₁₅H₃₁O-(CH₂-CH₂O)₂] (Me) (EtO)Si(CH₂)₃]₂Sₘ,
[[C₁₅H₃₁O-(CH₂-CH₂O)₃] (Me) (EtO)Si(CH₂)₃]₂Sm,
[[C₁₅H₃₁O-(CH₂-CH₂O)₄] (Me) (EtO)Si(CH₂)₃]₂Sₘ,
[[C₁₅H₃₁O-(CH₂-CH₂O)₅] (Me) (EtO)Si(CH₂)₃]₂Sₘ,
[[C₁₅H₃₁O-(CH₂-CH₂O)₆] (Me) (EtO)Si(CH₂)₃]₂Sₘ,

[[C₁₆H₃₃O-(CH₂-CH₂O)₂] (Me) (EtO)Si(CH₂)₃]₂Sₘ,
[[C₁₆H₃₃O-(CH₂-CH₂O)₃] (Me) (EtO)Si(CH₂)₃]₂Sₘ,
[[C₁₆H₃₃O-(CH₂-CH₂O)₄] (Me) (EtO)Si(CH₂)₃]₂Sₘ,
[[C₁₆H₃₃O-(CH₂-CH₂O)₅] (Me) (EtO)Si(CH₂)₃]₂Sₘ,
[[C₁₆H₃₃O-(CH₂-CH₂O)₆] (Me) (EtO)Si(CH₂)₃]₂Sₘ,

[[C₁₇H₃₅O-(CH₂-CH₂O)₂] (Me) (EtO)Si(CH₂)₃]₂Sₘ,
[[C₁₇H₃₅O-(CH₂-CH₂O)₃] (Me) (EtO)Si(CH₂)₃]₂Sₘ,
[[C₁₇H₃₅O-(CH₂-CH₂O)₄] (Me) (EtO)Si(CH₂)₃]₂Sₘ,
[[C₁₇H₃₅O-(CH₂-CH₂O)₅] (Me) (EtO)Si(CH₂)₃]₂Sₘ,
[[C₁₇H₃₅O-(CH₂-CH₂O)₆] (Me) (EtO)Si(CH₂)₃]₂Sₘ,

[[C₁₈H₃₇O-(CH₂-CH₂O)₂] (Me) (EtO)Si(CH₂)₃]₂Sₘ,
[[C₁₈H₃₇O-(CH₂-CH₂O)₃] (Me) (EtO)Si(CH₂)₃]₂Sₘ,
[[C₁₈H₃₇O-(CH₂-CH₂O)₄] (Me) (EtO)Si(CH₂)₃]₂Sₘ,
[[C₁₈H₃₇O-(CH₂-CH₂O)₅] (Me) (EtO)Si(CH₂)₃]₂Sₘ,

[[C₁₀H₂₁O-(CH₂-CH₂O)₂](MeO)₂Si(CH₂)₃]₂Sₘ,
[[C₁₀H₂₁O-(CH₂-CH₂O)₃](MeO)₂Si(CH₂)₃]₂Sₘ,
[[C₁₀H₂₁O-(CH₂-CH₂O)₄](MeO)₂Si(CH₂)₃]₂Sₘ,
[[C₁₀H₂₁O-(CH₂-CH₂O)₅](MeO)₂Si(CH₂)₃]₂Sₘ,
[[C₁₀H₂₁O-(CH₂-CH₂O)₆](MeO)₂Si(CH₂)]₂Sₘ,

[[C₁₁H₂₃O-(CH₂-CH₂O)₂](MeO)₂Si(CH₂)₂]₂Sₘ,
[[C₁₁H₂₃O-(CH₂-CH₂O)₃](MeO)₂Si(CH₂)₃]₂Sₘ,
[[C₁₁H₂₃O-(CH₂-CH₂O)₄](MeO)₂Si(CH₂)₃]₂Sₘ,
[[C₁₁H₂₃O-(CH₂-CH₂O)₅](MeO)₂Si(CH₂)₃]₂Sₘ,
[[C₁₁H₂₃O-(CH₂-CH₂O)₆](MeO)₂Si(CH₂)₃]₂Sₘ,

[[C₁₂H₂₅O-(CH₂-CH₂O)₂](MeO)₂Si(CH₂)₃]₂Sₘ,
[[C₁₂H₂₅O-(CH₂-CH₂O)₃](MeO)₂Si(CH₂)₃]₂Sₘ,
[[C₁₂H₂₅O-(CH₂-CH₂O)₄](MeO)₂Si(CH₂)₃]₂Sₘ,
[[C₁₂H₂₅O-(CH₂-CH₂O)₅](MeO)₂Si(CH₂)₃]₂Sₘ,
[[C₁₂H₂₅O-(CH₂-CH₂O)₆](MeO)₂Si(CH₂)₃]₂Sₘ,
[[C₁₂H₂₅O-(CH₂-CH₂O)₂](MeO)₂Si(CH₂)₃]₂Sₘ,

[[C₁₃H₂₇O-(CH₂-CH₂O)₃](MeO)₂Si(CH₂)₃]₂Sₘ,
[[C₁₃H₂₇O-(CH₂-CH₂O)₄](MeO)₂Si(CH₂)₃]₂Sₘ,
[[C₁₃H₂₇O-(CH₂-CH₂O)₅](MeO)₂Si(CH₂)₃]₂Sₘ,
[[C₁₃H₂₇O-(CH₂-CH₂O)₆](MeO)₂Si(CH₂)₃]₂Sₘ,

[[C₁₄H₂₉O-(CH₂-CH₂O)₂](MeO)₂Si(CH₂)₃]₂Sₘ,
[[C₁₄H₂₉O-(CH₂-CH₂O)₃](MeO)₂Si(CH₂)₃]₂Sₘ,
[[C₁₄H₂₉O-(CH₂-CH₂O)₄](MeO)₂Si(CH₂)₃]₂Sₘ,
[[C₁₄H₂₉O-(CH₂-CH₂O)₅](MeO)₂Si(CH₂)₃]₂Sₘ,
[[C₁₄H₂₉O-(CH₂-CH₂O)₆](MeO)₂Si(CH₂)₃]₂Sₘ,

[[C₁₆H₃₃O-(CH₂-CH₂O)₂](MeO)₂Si(CH₂)₃]₂Sₘ,
[[C₁₆H₃₃O-(CH₂-CH₂O)₃](MeO)₂Si(CH₂)₃]₂Sₘ,
[[C₁₆H₃₃O-(CH₂-CH₂O)₄](MeO)₂Si(CH₂)₃]₂Sₘ,
[[C₁₆H₃₃O-(CH₂-CH₂O)₅](MeO)₂Si(CH₂)₃]₂Sₘ,
[[C₁₆H₃₃O-(CH₂-CH₂O)₆](MeO)₂Si(CH₂)₃] ₂Sₘ,

[[C₁₈H₃₇O-(CH₂-CH₂O)₂](MeO)₂Si(CH₂)₃] ₂Sₘ,
   [[C₁₈H₃₇O-(CH₂-CH₂O)₃](MeO)₂Si(CH₂)₃] ₂Sₘ,
   [[C₁₈H₃₇O-(CH₂-CH₂O)₄](MeO)₂Si(CH₂)₃] ₂Sₘ,
   [[C₁₈H₃₇O-(CH₂-CH₂O)₅](MeO)₂Si(CH₂)₃] ₂Sₘ,

[[C₁₂H₂₅O-(CH₂-CH₂O)₂] ₂(MeO)Si(CH₂)₃] ₂Sₘ,
[[C₁₂H₂₅O-(CH₂-CH₂O)₃] ₂(MeO)Si(CH₂)₃] ₂Sₘ,
[[C₁₂H₂₅O-(CH₂-CH₂O)₄] ₂(MeO)Si(CH₂)₃] ₂Sₘ,
[[C₁₂H₂₅O-(CH₂-CH₂O)₅] ₂(MeO)Si(CH₂)₃] ₂Sₘ,
[[C₁₂H₂₅O-(CH₂-CH₂O)₆] ₂(MeO)Si(CH₂)₃] ₂Sₘ,

[[C₁₃H₂₇O-(CH₂-CH₂O)₂] ₂(MeO)Si(CH₂)₃] ₂Sₘ,
   [[C₁₃H₂₇O-(CH₂-CH₂O)₃] ₂(MeO)Si(CH₂)₃] ₂Sₘ,
   [[C₁₃H₂₇O-(CH₂-CH₂O)₄] ₂(MeO)Si(CH₂)₃] ₂Sₘ,
   [[C₁₃H₂₇O-(CH₂-CH₂O)₅] ₂(MeO)Si(CH₂)₃] ₂Sₘ,
   [[C₁₃H₂₇O-(CH₂-CH₂O)₆] ₂(MeO)Si(CH₂)₃] ₂S_{m,}

[[C₁₄H₂₉O-(CH₂-CH₂O)₂] ₂(MeO)Si(CH₂)₃] ₂Sₘ,
   [[C₁₄H₂₉O-(CH₂-CH₂O)₃] ₂(MeO)Si(CH₂)₃] ₂Sₘ,
   [[C₁₄H₂₉O-(CH₂-CH₂O)₄] ₂(MeO)Si(CH₂)₃] ₂Sₘ,
   [[C₁₄H₂₉O-(CH₂-CH₂O)₅] ₂(MeO)Si(CH₂)₃] ₂Sₘ,
   [[C₁₄H₂₉O-(CH₂-CH₂O)₆] ₂(MeO)Si(CH₂)₃] ₂Sₘ,

[[C₁₆H₃₃O-(CH₂-CH₂O)₂] ₂(MeO)Si(CH₂)_{3] 2}Sₘ,
   [[C₁₆H₃₃O-(CH₂-CH₂O)₃] ₂(MeO)Si(CH₂)_{3] 2}Sₘ,
   [[C₁₆H₃₃O-(CH₂-CH₂O)₄] ₂(MeO)Si(CH₂)_{3] 2}Sₘ,
   [[C₁₆H₃₃O-(CH₂-CH₂O)₅] ₂(MeO)Si(CH₂)_{3] 2}Sₘ,
   [[C₁₆H₃₃O-(CH₂-CH₂O)₆] ₂(MeO)Si(CH₂)₃] ₂Sₘ,

[[C₁₈H₃₇O-(CH₂-CH₂O)₂] ₂(MeO)Si(CH₂)₃] ₂Sₘ,
   [[C₁₈H₃₇O-(CH₂-CH₂O)₃] ₂(MeO)Si(CH₂)₃] ₂Sₘ,
   [[C₁₈H₃₇O-(CH₂-CH₂O)₄] ₂(MeO)Si(CH₂)₃] ₂Sₘ,
   [[C₁₈H₃₇O-(CH₂-CH₂O)₅] ₂(MeO)Si(CH₂)₃] ₂Sₘ,

[[C₁₀H₂₁O-(CH₂-CH₂O)₂](EtO)₂Si(CH₂)₃] ₂Sₘ,
[[C₁₀H₂₁O-(CH₂-CH₂O)₃](EtO)₂Si(CH₂)₃]₂Sₘ,
[[C₁₀H₂₁O-(CH₂-CH₂O)₄](EtO)₂Si(CH₂)₃]₂Sₘ,
[[C₁₀H₂₁O-(CH₂-CH₂O)₅](EtO)₂Si(CH₂)₃]₂Sₘ,
[[C₁₀H₂₁O-(CH₂-CH₂O)₆](EtO)₂Si(CH₂)₃]₂Sₘ,

[[C₁₁H₂₃O-(CH₂-CH₂O)₂](EtO)₂Si(CH₂)₃]₂Sₘ,
[[C₁₁H₂₃O-(CH₂-CH₂O)₃](EtO)₂Si(CH₂)₃]₂Sₘ,
[[C₁₁H₂₃O-(CH₂-CH₂O)₄](EtO)₂Si(CH₂)₃]₂Sₘ,
[[(C₁₁H₂₃O-(CH₂-CH₂O)₅](EtO)₂Si(CH₂)₃]₂Sₘ,
[[(C₁₁H₂₃O-(CH₂-CH₂O)₆](EtO)₂Si(CH₂)₃]₂Sₘ,

[[C₁₂H₂₅O-(CH₂-CH₂O)₂](EtO)₂Si(CH₂)₃]₂Sₘ,
[[C₁₂H₂₅O-(CH₂-CH₂O)₃](EtO)₂Si(CH₂)₃]₂Sₘ,
[[C₁₂H₂₅O-(CH₂-CH₂O)₄](EtO)₂Si(CH₂)₃]₂Sₘ,
[[(C₁₂H₂₅O-(CH₂-CH₂O)₅](EtO)₂Si(CH₂)₃]₂Sₘ,
[[(C₁₂H₂₅O-(CH₂-CH₂O)₆](EtO)₂Si(CH₂)₃]₂Sₘ,

[[C₁₃H₂₇O-(CH₂-CH₂O)₂](EtO)₂Si(CH₂)₃]₂Sₘ,
[[C₁₃H₂₇O-(CH₂-CH₂O)₃](EtO)₂Si(CH₂)₃]₂Sₘ,
[[C₁₃H₂₇O-(CH₂-CH₂O)₄](EtO)₂Si(CH₂)₃]₂Sₘ,
[[C₁₃H₂₇O-(CH₂-CH₂O)₅](EtO)₂Si(CH₂)₃]₂Sₘ,
[[C₁₃H₂₇O-(CH₂-CH₂O)₆](EtO)₂Si(CH₂)₃]₂Sₘ,

[[C₁₄H₂₉O-(CH₂-CH₂O)₂](EtO)₂Si(CH₂)₃]₂Sₘ,
[[C₁₄H₂₉O-(CH₂-CH₂O)₃](EtO)₂Si(CH₂)₃]₂Sₘ,
[[C₁₄H₂₉O-(CH₂-CH₂O)₄](EtO)₂Si(CH₂)₃]₂Sₘ,
[[C₁₄H₂₉O-(CH₂-CH₂O)₅](EtO)₂Si(CH₂)₃]₂Sₘ,
[[C₁₄H₂₉O-(CH₂-CH₂O)₆](EtO)₂Si(CH₂)₃]₂Sₘ,

[[C₁₆H₃₃O-(CH₂-CH₂O)₂](EtO)₂Si(CH₂)₃]₂Sₘ,
[[C₁₆H₃₃O-(CH₂-CH₂O)₃](EtO)₂Si(CH₂)₃]₂Sₘ,
[[C₁₆H₃₃O-(CH₂-CH₂O)₄](EtO)₂Si(CH₂)₃]₂Sₘ,
[[C₁₆H₃₃O-(CH₂-CH₂O)₅](EtO)₂Si(CH₂)₃]₂Sₘ,
[[C₁₆H₃₃O-(CH₂-CH₂O)₆](EtO)₂Si(CH₂)₃]₂Sₘ,

[[C₁₇H₃₅O-(CH₂-CH₂O)₂](EtO)₂Si(CH₂)₃]₂Sₘ,
[[C₁₇H₃₅O-(CH₂-CH₂O)₃](EtO)₂Si(CH₂)₃]₂Sₘ,
[[C₁₇H₃₅O-(CH₂-CH₂O)₄](EtO)₂Si(CH₂)₃]₂Sₘ,
[[C₁₇H₃₅O-(CH₂-CH₂O)₅](EtO)₂Si(CH₂)₃]₂Sₘ,
[[C₁₇H₃₅O-(CH₂-CH₂O)₆](EtO)₂Si(CH₂)₃]₂Sₘ,

[C₁₈H₃₇O-(CH₂-CH₂O)₂](EtO)₂Si(CH₂)₃]₂Sₘ,
[[C₁₈H₃₇O-(CH₂-CH₂O)₃](EtO)₂Si(CH₂)₃]₂Sₘ,
[[C₁₈H₃₇O-(CH₂-CH₂O)₄](EtO)₂Si(CH₂)₃]₂Sₘ,
[[C₁₈H₃₇O-(CH₂-CH₂O)₅](EtO)₂Si(CH₂)₃]₂Sₘ,

[[C₁₂H₂₅O-(CH₂-CH₂O)₂]₂(EtO)Si(CH₂)₃]₂Sₘ,
[C₁₂H₂₅O-(CH₂-CH₂O)₃](EtO)Si(CH₂)₃]₂Sₘ,
[[C₁₂H₂₅O-(CH₂-CH₂O)₄]₂(EtO)Si(CH₂)₃]₂Sₘ,
[[C₁₂H₂₅O-(CH₂-CH₂O)₅]₂(EtO)Si(CH₂)₃]₂Sₘ,
[[C₁₂H₂₅O-(CH₂-CH₂O)₆]₂(EtO)Si(CH₂)₃]₂Sₘ,

[[C₁₃H₂₇O-(CH₂-CH₂O)₂]₂(EtO)Si(CH₂)₃]₂Sₘ,
[[C₁₃H₂₇O-(CH₂-CH₂O)₃]₂(EtO)Si(CH₂)₃]₂Sₘ,
[C₁₃H₂₇O-(CH₂-CH₂O)₄]₂(EtO)Si(CH₂)₃]₂Sₘ,
[C₁₃H₂₇O-(CH₂-CH₂O)₅]₂(EtO)Si(CH₂)₃]₂Sₘ,
[C₁₃H₂₇O-(CH₂-CH₂O)₆](EtO)Si(CH₂)₃]₂Sₘ,

[[C₁₄H₂₉O-(CH₂-CH₂O)₂]₂(EtO)Si(CH₂)₃]₂Sₘ,
[[C₁₄H₂₉O-(CH₂-CH₂O)₃]₂(EtO)Si(CH₂)₃]₂Sₘ,
[[C₁₄H₂₉O-(CH₂-CH₂O)₄]₂(EtO)Si(CH₂)₃]₂Sₘ,
[[C₁₄H₂₉O-(CH₂-CH₂O)₅]₂(EtO)Si(CH₂)₃]Sₘ,
[[C₁₄H₂₉O-(CH₂-CH₂O)₆]₂(EtO)Si(CH₂)₂]Sₘ,

[[C₁₆H₃₃O-(CH₂-CH₂O)₂]₂(EtO)Si(CH₂)₃]₂Sₘ,
[[C₁₆H₃₃O-(CH₂-CH₂O)₃]₂(EtO)Si(CH₂)₃]₂Sₘ,
[[C₁₆H₃₃O-(CH₂-CH₂O)₄]₂(EtO)Si(CH₂)₃]₂Sₘ,
[[C₁₆H₃₃O-(CH₂-CH₂O)₅]₂(EtO)Si(CH₂)₃]₂Sₘ,
[[C₁₆H₃₃O-(CH₂-CH₂O)₆]₂(EtO)Si(CH₂)₃]₂Sₘ,

[[C₁₇H₃₅O-(CH₂-CH₂O)₂]₂(EtO)Si(CH₂)₃]₂Sₘ,
[[C₁₇H₃₅O-(CH₂-CH₂O)₃]₂(EtO)Si(CH₂)₃]₂Sₘ,
[[C₁₇H₃₅O-(CH₂-CH₂O)₄]₂(EtO)Si(CH₂)₃]₂Sₘ,
[[C₁₇H₃₅O-(CH₂-CH₂O)₅]₂(EtO)Si(CH₂)₃]₂Sₘ,
[[C₁₇H₃₅O-(CH₂-CH₂O)₆]₂(EtO)Si(CH₂)₃]₂Sₘ,

[[C₁₈H₃₇O-(CH₂-CH₂O)₂]₂(EtO)Si(CH₂)₃]Sₘ,
[[C₁₈H₃₇O-(CH₂-CH₂O)₃]₂(EtO)Si(CH₂)₃]₂Sₘ,
[[C₁₈H₃₇O-(CH₂-CH₂O)₄]₂(EtO)Si(CH₂)₃]₂Sₘ,
[[C₁₈H₃₇O-(CH₂-CH₂O)₅]₂(EtO)Si(CH₂)₃]₂Sₘ,

[[C₁₀H₂₁O-(CH₂-CH₂O)₂]₃Si(CH₂)₃]₂Sₘ,
[[C₁₀H₂₁O-(CH₂-CH₂O)₃]₃Si(CH₂)₃]₂Sₘ,
[[C₁₀H₂₁O-(CH₂-CH₂O)₄]₃Si(CH₂)₃]₂Sₘ,
[[C₁₀H₂₁O-(CH₂-CH₂O)₅]₃Si(CH₂)₃]₂Sₘ,
[[C₁₀H₂₁O-(CH₂-CH₂O)₆]₃Si(CH₂)₃]₂Sₘ,

[[C₁₂H₂₅O-(CH₂-CH₂O)₂]₃Si(CH₂)₃]₂Sₘ,
[[C₁₂H₂₅O-(CH₂-CH₂₀)₃]₃Si(CH₂)₃]₂Sₘ,
[[C₁₂H₂₅O-(CH₂-CH₂O)₄]₃Si(CH₂)₃]₂Sₘ,
[C₁₂H₂₅O-(CH₂-CH₂O)₅]₃Si(CH₂)₃]₂Sₘ,
[[C₁₂H₂₅O-(CH₂-CH₂O)₆]₃Si(CH₂)₃]₂Sₘ,

[[C₁₃H₂₇O-(CH₂-CH₂O)₂]₃Si(CH₂)₃]₂Sₘ,
[[C₁₃H₂₇O-(CH₂-CH₂O)₃]₃Si(CH₂)₃]₂Sₘ,
[[C₁₃H₂₇O-(CH₂-CH₂O)₄]₃Si(CH₂)₃]₂Sₘ,
[[C₁₃H₂₇O-(CH₂-CH₂O)₅]₃Si(CH₂)₃]₂Sₘ,
[[C₁₃H₂₇O-(CH₂-CH₂O)₆]₃Si(CH₂)₃]₂Sₘ,

[[C₁₄H₂₉O-(CH₂-CH₂O)₂]₃Si(CH₂)₃]₂Sₘ,
[[C₁₄H₂₉O-(CH₂-CH₂O)₃]₃Si(CH₂)₃]₂Sₘ,
[[C₁₄H₂₉O-(CH₂-CH₂O)₄]₃Si(CH₂)₃]₂Sₘ,
[[C₁₄H₂₉O-(CH₂-CH₂O)₅]₃Si(CH₂)₃]₂Sₘ,
[[C₁₄H₂₉O-(CH₂-CH₂O)₆]₃Si(CH₂)₃]₂Sₘ,

[[C₁₅H₃₁O-(CH₂-CH₂O)₂]₃Si(CH₂)₃]₂Sₘ,
[[C₁₅H₃₁O-(CH₂-CH₂O)₃]₃Si(CH₂)₃]₂Sₘ,
[[C₁₅H₃₁O-(CH₂-CH₂O)₄]₃Si(CH₂)₃]₂Sₘ,
[[C₁₅H₃₁O-(CH₂-CH₂O)₅]₃Si(CH₂)₃]₂Sₘ,
[[C₁₅H₃₁O-(CH₂-CH₂O)₆]₃Si(CH₂)₃]₂Sₘ,

[[C₁₆H₃₃O-(CH₂-CH₂O)₂] ₃Si(CH₂)₃] ₂Sₘ,
   [[C₁₆H₃₃O-(CH₂-CH₂O)_{3] 3}Si(CH₂)₃] ₂Sₘ,
   [[C₁₆H₃₃O-(CH₂-CH₂O)_{4] 3}Si(CH₂)₃] ₂Sₘ,
   [[C₁₆H₃₃O-(CH₂-CH₂O)_{5] 3}Si(CH₂)₃] ₂Sₘ,
   [[C₁₆H₃₃O-(CH₂-CH₂O)_{6] 3}Si(CH₂)₃] ₂Sₘ,
[[C₁₈H₃₇O-(CH₂-CH₂O)₂] ₃Si(CH₂)₃] ₂Sₘ,
   [[C₁₈H₃₇O-(CH₂-CH₂O)₃] ₃Si(CH₂)₃] ₂Sₘ,
   [[C₁₈H₃₇O-(CH₂-CH₂O)₄] ₃Si(CH₂)_{3] 2}Sₘ oder
   [[C₁₈H₃₇O-(CH₂-CH₂O)_{5] 3}Si(CH₂)₃] ₂Sₘ,
wobei die Alkylreste unverzweigt oder verzweigt sein können.

Verbindungen der Formel I mit Alk = C₁₀H₂₁, C₁₁H₂₃, C₁₂H₂₅, C₁₃H₂₇, C₁₄H₂₉, C₁₅H₃₁, C₁₆H₃₃, C₁₇H₃₅, C₁₈H₃₇, C₁₉H₃₉ oder C₂₀H₄₁ können sein:
[[Alk-O-(CH₂-CH(CH₃)O-)₂](MeO)₂Si(CH₂)₃] ₂Sₘ,
   [[Alk-O-(CH₂-CH(CH₃)O-)₃](MeO)₂Si(CH₂)₃] ₂Sₘ,
   [[Alk-O-(CH₂-CH(CH₃)O-)₄](MeO)₂Si(CH₂)₃] ₂Sₘ,
   [[Alk-O-(CH₂-CH(CH₃)O-)₅](MeO)₂Si(CH₂)₃] ₂Sₘ,
   [[Alk-O-(CH₂-CH(CH₃)O-)₆](MeO)₂Si(CH₂)₃] ₂Sₘ,
[[(Alk-O-(CH₂-CH(CH₃)O-)₂] ₂(MeO)Si(CH₂)₃] ₂Sₘ,
   [[Alk-O-(CH₂-CH(CH₃)O-)₃] ₂(MeO)Si(CH₂)₃] ₂Sₘ,
   [[Alk-O-(CH₂-CH(CH₃)O-)₄] ₂(MeO)Si(CH₂)₃] ₂Sₘ,
   [[Alk-O-(CH₂-CH(CH₃)O-)₅] ₂(MeO)Si(CH₂)₃] ₂Sₘ,
   [[Alk-O-(CH₂-CH(CH₃)O-)₆] ₂(MeO)Si(CH₂)₃] ₂Sₘ,
[[Alk-O-(CH₂-CH(CH₃)O-)₂](Me)(MeO)Si(CH₂)₃]₂Sₘ,
   [[Alk-O-(CH₂-CH(CH₃)O-)₃](Me)(MeO)Si(CH₂)₃]₂Sₘ,
   [[Alk-O-(CH₂-CH(CH₃)O-)₄](Me)(MeO)Si(CH₂)₃]₂Sₘ,
   [[Alk-O-(CH₂-CH(CH₃)O-)₅](Me)(MeO)Si(CH₂)₃] ₂Sₘ,
   [[Alk-O-(CH₂-CH(CH₃)O-)₆](Me)(MeO)Si(CH₂)₃]₂Sₘ,
[[Alk-O-(CH₂-CH(CH₃)O-)₂](EtO)₂Si(CH₂)₃] ₂Sₘ,
   [[Alk-O-(CH₂-CH(CH₃)O-)₃](EtO)₂Si(CH₂)₃] ₂Sₘ,
   [[Alk-O-(CH₂-CH(CH₃)O-)₄](EtO)₂Si(CH₂)₃]₂Sₘ,
   [[Alk-O-(CH₂-CH(CH₃)O-)₅](EtO)₂Si(CH₂)₃]₂Sₘ,
   [[Alk-O-(CH₂-CH(CH₃)O-)₆](EtO)₂Si(CH₂)₃]₂Sₘ,
[[Alk-O-(CH₂-CH(CH₃)O-)₂] ₂(EtO)Si(CH₂)₃]₂Sₘ,
   [[Alk-O-(CH₂-CH(CH₃)O-)₃] ₂(EtO)Si(CH₂)₃]₂Sₘ,
   [[Alk-O-(CH₂-CH(CH₃)O-)₄] ₂(EtO)Si(CH₂)₃]₂Sₘ,
   [[Alk-O-(CH₂-CH(CH₃)O-)₅] ₂(EtO)Si(CH₂)₃]₂Sₘ,
   [[Alk-O-(CH₂-CH(CH₃)O-)₆] ₂(EtO)Si(CH₂)₃]₂Sₘ,
[[Alk-O-(CH₂-CH(CH₃)O-)₂](Me)(EtO)Si(CH₂)₃]₂Sₘ,
   [[Alk-O-(CH₂-CH(CH₃)O-)₃](Me)(EtO)Si(CH₂)₃]₂Sₘ,
   [[Alk-O-(CH₂-CH(CH₃)O-)₄](Me)(EtO)Si(CH₂)₃]₂Sₘ,
   [[Alk-O-(CH₂-CH(CH₃)O-)₅](Me)(EtO)Si(CH₂)₃]₂Sₘ,
   [[Alk-O-(CH₂-CH(CH₃)O-)₆](Me)(EtO)Si(CH₂)₃]₂Sₘ,
[[Alk-O-(CH₂-CH(CH₃)O-)₂] ₂(Me)Si(CH₂)₃]₂Sₘ,
   [[Alk-O-(CH₂-CH(CH₃)O-)₃] ₂(Me)Si(CH₂)₃]₂Sₘ,
   [[Alk-O-(CH₂-CH(CH₃)O-)₄] ₂(Me)Si(CH₂)₃]₂Sₘ,
   [[Alk-O-(CH₂-CH(CH₃)O-)₅] ₂(Me)Si(CH₂)₃]₂Sₘ,
   [[Alk-O-(CH₂-CH(CH₃)O-)₆] ₂(Me)Si(CH₂)₃]₂Sₘ,
[[Alk-O-(CH₂-CH(CH₃)O-)₂](Me)₂Si(CH₂)₃]₂Sₘ,
   [[Alk-O-(CH₂-CH(CH₃)O-)₃](Me)₂Si(CH₂)₃]₂Sₘ,
   [[Alk-O-(CH₂-CH(CH₃)O-)₄](Me)₂Si(CH₂)₃]₂Sₘ,
   [[Alk-O-(CH₂-CH(CH₃)O-)_{5]}(Me)₂Si(CH₂)₃]₂Sₘ oder
   [[Alk-O-(CH₂-CH(CH₃)O-)_{6]}(Me)₂Si(CH₂)₃]₂Sₘ,
wobei die Gruppen Alk unverzweigt oder verzweigt sein können und die Alkylpolyethergruppe X 14-29 Kohlenstoffatome hat.

Die polysulfidischen Organo(alkylpolyethersilane)der allgemeinen Formel I können ein Gemisch aus polysulfidischen Organo(alkylpolyethersilanen)der allgemeinen Formel I sein.

Die polysulfidischen Organo(alkylpolyethersilane)der allgemeinen Formel I können ein Gemisch aus polysulfidischen Organo(alkylpolyethersilanen)der allgemeinen Formel I sein, in denen X, X' und X" Alkoxy und Alkylpolyethergruppen sind.

Die polysulfidischen Organo(alkylpolyethersilane)der allgemeinen Formel I können ein Gemisch aus polysulfidischen Organo(alkylpolyethersilanen)der allgemeinen Formel I sein, die unterschiedliche t und w besitzen.

Die polysulfidischen Organo(alkylpolyethersilane)der allgemeinen Formel I können ein Gemisch aus polysulfidischen Organo(alkylpolyethersilanen)der allgemeinen Formel I sein, in denen Alk unterschiedliche Anzahl an Kohlenstoffatomen hat und/oder verzweigt ist.

Die polysulfidischen Organo(alkylpolyethersilane)der allgemeinen Formel I können ein Gemisch aus polysulfidischen Organo(alkylpolyethersilanen)der allgemeinen Formel I sein, in denen Verbindungen mit m=2 mit mehr als 5 Gew.-%, bevorzugt mit mehr als 10 Gew.-%, besonders bevorzugt mit mehr als 25 Gew.-%, ganz besonders bevorzugt mit mehr als 50 Gew.-%, enthalten sind.

Aus den polysulfidischen Organo(alkylpolyethersilanen)der Formel I können durch Wasserzugabe und ggf. Additivzugabe leicht Kondensationsprodukte, das heisst Oligo- und Polysiloxane, gebildet werden.

Diese oligomeren oder polymeren Siloxane der Verbindungen der Formel I können als Kopplungsreagenzien für dieselben Anwendungen wie die monomeren Verbindungen der Formel I verwendet werden.

Die polysulfidischen Organo(alkylpolyethersilane)können als Mischung der oligomeren oder polymeren Siloxane von polysulfidischen Organo(alkylpolyethersilanen)der allgemeinen Formel I oder als Mischungen von polysulfidischen Organo(alkylpolyethersilanen)der allgemeinen Formel I mit Mischungen der oligomeren oder polymeren Siloxane von polysulfidischen Organo(alkylpolyethersilanen)der allgemeinen Formel I vorliegen.

Die polysulfidischen Organo(alkylpolyethersilane)können mittels hochauflösender ¹H-, ²⁹Si-, ¹³C-NMR, GPC oder hochauflösender Massenspektroskopie analytisch beschrieben werden.

Die polysulfidischen Organo(alkylpolyethersilane)können bevorzugt mittels hochauflösender ¹³C-NMR analytisch beschrieben werden.

Die polysulfidischen Organo(alkylpolyethersilane)können per DSC (Difference Scanning Calorimetry) durch Ihren Schmelzbereich beschrieben und charakterisiert werden.

Die Zusammensetzung der entstandenen Substanzgemische bezüglich der relativen Verteilung der Alkoxysubstituenten zueinander kann durch ¹³C- und ²⁹Si-Kernresonanzspektroskopie ermittelt werden.

Die Zusammensetzung der entstandenen Substanzgemische bezüglich der relativen Verteilung der Alkoxysubstituenten zueinander kann durch Totalhydrolyse der Alkoxysilane und anschließender gaschromatografischer Analyse erfolgen.

Die Zusammensetzung der entstandenen Substanzgemische bezüglich der relativen Verteilung der Alkoxysubstituenten zueinander kann durch Totalhydrolyse der erfindungsgemäßen Alkoxysilane und anschließender HPLC-Analyse erfolgen.

Die polysulfidischen Organo(alkylpolyethersilane)der allgemeinen Formel I können hergestellt werden, indem man Silane der allgemeinen Formel II

[(RO)(X"')(X"")Si-R^{I}]₂-Sₘ II,

wobei R^{I} und m die oben genannte Bedeutung hat und (RO) ein verzweigtes oder unverzweigtes Alkoxy, bevorzugt C1-C25 Alkoxy, besonders bevorzugt C1-C18 Alkoxy, besonders bevorzgt O-CH₃, O-CH₂-CH₃, O-CH₂-CH₂-CH₃, O-CH(CH₃)₂, O-C₈H₁₇, O-C₉H₁₉, O-C₁₀H₂₁, O-C₁₁H₂₃, O-C₁₂H₂₅, O-C₁₃H₂₇, O-C₁₄H₂₉, O-C₁₅H₃₁, O-C₁₆H₃₃, O-C₁₇H₃₅, O-C₁₈H₃₇,
X"' ein verzweigtes oder unverzweigtes Alkyl, bevorzugt C₁-C₁₈ Alkyl-,besonders bevorzugt CH₃, CH₂-CH₃, CH(CH₃)-CH₃, CH₂-CH₂-CH₃ oder C₄-C₁₅- Alkyl,
ein verzweigtes oder unverzweigtes Alkoxy, bevorzugt C₁-C₁₈ Alkoxy-, besonders bevorzugt -OCH₃, -OCH₂-CH₃, -OCH(CH₃)-CH₃, -OCH₂-CH₂-CH₃, -OC₁₂H₂₅, -OC₁₃H₂₇, -OC₁₄H₂₉ oder C₁₅-C₁₈ Alkoxy, ein verzweigtes oder unverzweigtes C₂-C₂₅ Alkenyloxy-, vorzugsweise C₄-C₂₀Alkenyloxy, besonders bevorzugt C₆ bis C₁₈ Alkenyloxy,
ein C₆-C₃₅ Aryloxy-, vorzugsweise C₉-C₃₀ Aryloxy, besonders bevorzugt Phenyloxy (-OC₆H₅) oder C₉ bis C₁₈ Aryloxy,
eine verzweigte oder unverzweigte C₇-C₃₅ Alkylaryloxygruppe, vorzugsweise C₉-C₃₀ Alkylaryloxygruppe, besonders bevorzugt Benzyloxy-, (-O-CH₂-C₆H₅) oder -O-CH₂-CH₂-C₆H₅,
eine verzweigte oder unverzweigte C₇-C₃₅ Aralkyloxygruppe, vorzugsweise C₉-C₂₅ Aralkyloxygruppe, besonders bevorzugt Tolyloxy (-O-C₆H₄-CH₃) oder eine C₉ bis C₁₈ Aralkyloxygruppe, oder ein(RO)ist,
X"" ein verzweigtes oder unverzweigtes Alkyl, bevorzugt C₁-C₁₈ Alkyl-,besonders bevorzugt CH₃, CH₂-CH₃, CH(CH₃)-CH₃, CH₂-CH₂-CH₃ oder C₄-C₁₅- Alkyl,
ein verzweigtes oder unverzweigtes Alkoxy, bevorzugt C₁-C₁₈ Alkoxy-, besonders bevorzugt -OCH₃, -OCH₂-CH₃, -OCH(CH₃)-CH₃, -OCH₂-CH₂-CH₃ oder C₄-C₁₅Alkoxy,
ein C₂-C₂₅ Alkenyloxy-, vorzugsweise C₄-C₂₀ Alkenyloxy, besonders bevorzugt C₆ bis C₁₈ Alkenyloxy,
ein C₆-C₃₅ Aryloxy-, vorzugsweise C₉-C₃₀ Aryloxy, besonders bevorzugt Phenyloxy (-OC₆H₅) oder C₉ bis C₁₈ Aryloxy,
eine verzweigte oder unverzweigte C₇-C₃₅ Alkylaryloxygruppe, vorzugsweise C₉-C₃₀ Alkylaryloxygruppe, besonders bevorzugt Benzyloxy-, (-O-CH₂-C₆H₅) oder -O-CH₂-CH₂-C₆H₅,
eine verzweigte oder unverzweigte C₇-C₃₅ Aralkyloxygruppe, vorzugsweise C₉-C₂₅ Aralkyloxygruppe, besonders bevorzugt Tolyloxy (-O-C₆H₄-CH₃) oder eine C₉ bis C₁₈ Aralkyloxygruppe, oder ein(RO)ist,
mit einem alkoxylierten Alkohol HO-((CR^{II}₂)_{w}-O-)ₜ Alk unter Abspaltung von R-OH katalysiert oder unkatalysiert umsetzt und R-OH von dem Reaktionsgemisch kontinuierlich oder diskontinuierlich abtrennt.

Der alkoxylierte Alkohol HO-((CR^{II}₂)_{w}-O-)ₜ Alk, kann ein ethoxylierter Alkohol sein.

Der alkoxylierte Alkohol HO-((CR^{II}₂)_{w}-O-)ₜ Alk, kann ein propoxylierter Alkohol sein.

Das molare Verhältnis des alkoxylierten Alkohols HO-((CR^{II}₂)_{w}-O-)ₜ Alk, zu dem Silan der allgemeinen Formel II kann 0,01 bis 8, bevorzugt 0,1 bis 6,5 besonders bevorzugt 0,5 bis 6, ganz besonders bevorzugt 0,5 bis 4, sein.

Die als Ausgangsstoff eingesetzten Bis(alkoxysilylorganyl)-polysulfide der allgemeinen Formel II können eine Mischung aus verschiedenen Bis(alkoxysilylorganyl)polysulfiden mit -S₁- bis -S₁₂- (m=1-12) oder ein reines Bis(alkoxysilylorganyl)polysulfid mit m 2-12 sein.
Als Bis(alkoxysilylorganyl)polysulfide der allgemeinen Formel II können Verbindungen oder Gemische von Verbindungen mit einer mittleren Schwefelkettenlänge von 2,0 bis 4,0 eingesetzt werden. Die mittlere Schwefelkettenlänge für Bis(alkoxysilylorganyl)polysulfide kann als arithmetisches Mittel aus S₂ bis S₁₂, gemessen mit HPLC, bestimmt werden.

Verbindungen mit m = 1 können in den als Ausgangsstoff verwendeten Bis(alkoxysilylorganyl)polysulfiden der allgemeien Formel II zu 0,01 bis 20 Gew.-%, bevorzugt von 0,1 bis 15 Gew.-%, besonders bevorzugt von 0,1 bis 10 Gew.-%, ganz besonders bevorzugt von 1 bis 8 Gew.-% enthalten sein.

Oligo- und Polysiloxane der Verbindungen der allgemeinen Formel I können durch folgendes Verfahren erhalten werden: Oligomerisierung oder Cooligomerisierung der entsprechenden Alkoxysilanverbindungen der allgemeinen Formel II durch Wasserzugabe und dem Fachmann auf diesem Gebiet bekannte Additivzugabe und anschließender Austausch einzelner (RO-) in den Oligomeren bzw. Co-Oligomeren durch alkoxylierte Alkohole HO-((CR^{II}₂)_{w}-O-)ₜAlk mittels kontinuierlicher oder diskontinuierlicher, katalysierter oder unkatalysierter Umesterung.

Die für die Umesterung verwendeten alkoxylierten Alkohole HO-((CR^{II}₂)_{w}-O-)ₜAlk können sowohl als Gemische verschiedener Alkohole wie auch als reine Substanzen eingesetzt werden. Als alkoxylierte Alkohole HO-((CR^{II}₂)_{w}-O-)ₜ Alk können beispielsweise verzweigte oder lineare Alkohole eingesetzt werden, die ethoxyliert/propoxyliert sind bzw. Ethylenoxid- und Propylenoxid-Einheiten enthalten.

Die verwendeten alkoxylierten Alkohole können die Formel HO-((CR^{II}₂)_{w}-O-)ₜ Alk haben.

Die für die Umesterung als Katalysatoren verwendeten Verbindungen können metallhaltig oder metallfrei sein. Geeignete Katalysatoren sind in EP 1394167 beschrieben.

Die Reaktion kann man bei Temperaturen zwischen 20 und 200 °C, vorzugsweise zwischen 50 und 170°C, besonders bevorzugt zwischen 80 und 150°C, durchführen. Zur Vermeidung von Kondensationsreaktionen kann es vorteilhaft sein, die Reaktion in einer wasserfreien Umgebung, idealerweise in einer Inertgasatmosphäre, durchzuführen.

Die Reaktion kann man bei Normaldruck oder reduziertem Druck durchführen. Die Reaktion kann man kontinuierlich oder diskontinuierlich durchführen.

Die Organo(alkylpolyethersilane) der Formel I können als Haftvermittler zwischen anorganischen Materialien (zum Beispiel Glaskugeln, Glasplittern, Glasoberflächen, Glasfasern, Metallen, oxidischen Füllstoffen, Kieselsäuren) und organischen Polymeren (zum Beispiel Duroplasten, Thermoplasten, Elastomeren) beziehungsweise als Vernetzungsmittel und Oberflächenmodifizierungsmittel für oxidische Oberflächen verwendet werden. Die Organo(alkylpolyethersilane) der Formel I können als Kopplungsreagenzien in gefüllten Kautschukmischungen, beispielsweise Reifenlaufflächen, verwendet werden.

Als Styrol-Butadien-Kautschuk (SBR) können Styrol/Butadien-Copolymerisate, beispielsweise Emulsions-SBR (E-SBR) oder Lösungs-SBR (L-SBR) eingesetzt werden. Die Styrol/Butadien-Copolymerisate können einen Styrolgehalt von 1 bis 60 Gew.-%, vorzugsweise 2 bis 50 Gew.-%, besonders bevorzugt 10 bis 40 Gew.-%, ganz besonders bevorzugt 15 bis 35 Gew.-%, aufweisen. Für die Herstellung von PKW-Reifenlaufflächen können insbesondere anionisch polymerisierte L-SBR-Kautschuke (Lösungs-SBR) mit einer Glastemperatur oberhalb von -50 °C sowie deren Mischungen mit Dienkautschuken eingesetzt werden. Besonders bevorzugt können L-SBR-Kautschuke, deren Butadienteil einen Vinylanteil von über 20 Gew.-% aufweisen, eingesetzt werden. Ganz besonders bevorzugt können L-SBR-Kautschuke, deren Butadienteil einen Vinylanteil von über 50 Gew.-% aufweisen, eingesetzt werden.

Zusätzlich kann die erfindungsgemäße Kautschukmischung weitere Kautschuke, wie beispielsweise Naturkautschuk und/oder Synthesekautschuke, enthalten. Bevorzugte Synthesekautschuke sind beispielsweise bei W. Hofmann, Kautschuktechnologie, Genter Verlag, Stuttgart 1980, beschrieben. Als Synthesekautschuke können unter anderem
- Polybutadien (BR);
- Polyisopren (IR);
- Styrol/Butadien-Copolymerisate (SBR), beispielsweise Emulsions-SBR (E-SBR) oder Lösungs-SBR (L-SBR). Die Styrol/Butadien-Copolymerisate können einen Styrolgehalt von 1 bis 60 Gew.-%, vorzugsweise 2 bis 50 Gew.-%, besonders bevorzugt 10 bis 40 Gew.-%, ganz besonders bevorzugt 15 bis 35 Gew.-%, aufweisen;
- Chloropren (CR);
- Isobutylen/Isopren-Copolymerisate (IIR);
- Butadien/Acrylnitril-Copolymere mit Acrylnitrilgehalten von 5 bis 60, vorzugsweise 10 bis 50 Gew.-% (NBR), besonders bevorzugt 10 bis 45 Gew.-% (NBR), ganz besonders bevorzugt 19 bis 45 Gew.-% (NBR);
- teilhydrierter oder vollständig hydrierter NBR-Kautschuk (HNBR);
- Ethylen/Propylen/Dien-Copolymerisate (EPDM);
- oben genannte Kautschuke, die zusätzlich funktionelle Gruppen besitzen, wie zum Beispiel Carboxy- , Silanol- oder Epoxygruppen, beispielsweise Epoxidierter NR, Carboxy-funktionalisierter NBR oder Silanol-(-SiOH) bzw. Silylalkoxy-funktionalisierter (-Si-OR) SBR;
oder Mischungen dieser Kautschuke eingesetzt werden.

In einer bevorzugten Ausführungsform können die Kautschuke schwefelvulkanisierbar sein.

Bevorzugt können Mischungen der oben genannten Kautschuke, die einen L-SBR-Anteil von über 50 Gew.-%, besonders bevorzugt über 60 Gew.-%, aufweisen, eingesetzt werden.

Als Füllstoffe können für die erfindungsgemäßen Kautschukmischungen die folgenden Füllstoffe eingesetzt werden:
- Ruße: Die hierbei zu verwendenden Ruße können Flammruße, Furnaceruße, Gasruße oder Thermalruße sein. Die BET-Oberflächen der Ruße können 20 bis 200 m²/g betragen. Die Ruße können gegebenenfalls auch Heteroatome wie zum Beispiel Si enthalten.
- Amorphe Kieselsäuren, hergestellt zum Beispiel durch Fällung von Lösungen von Silikaten (Fällungskieselsäuren) oder Flammenhydrolyse von Siliciumhalogeniden (pyrogene Kieselsäuren). Die Kieselsäuren können eine spezifische Oberfläche von 5 bis 1000 m²/g, vorzugsweise 20 bis 400 m²/g (BET-Oberfläche)und Primärteilchengrößen von 10 bis 400 nm haben. Die Kieselsäuren können gegebenenfalls auch als Mischoxide mit anderen Metalloxiden, wie Al-, Mg-, Ca-, Ba-, Zn- und Titanoxiden vorliegen.
- Synthetische Silikate, wie Aluminiumsilikat, Erdalkalisilikate, wie Magnesiumsilikat oder Calciumsilikat, mit BET-Oberflächen von 20 bis 400 m²/g und Primärteilchendurchmessern von 10 bis 400 nm.
- Synthetische oder natürliche Aluminium-oxide und - hydroxide.
- Synthetische oder natürliche Calciumcarbonate, beispielsweise gefälltes Calciumcarbonat.
- Natürliche Silikate, wie Kaolin und andere natürlich vorkommende Kieselsäuren.
- Glasfaser und Glasfaserprodukte (Matten, Stränge) oder Mikroglaskugeln.
Für die erfindungsgemäßen Kauschukmischungen können Mischungen dieser Füllstoffe verwendet werden.

Bevorzugt können amorphe Kieselsäuren, hergestellt durch Fällung von Lösungen von Silikaten, mit BET-Oberflächen von 20 bis 400 m²/g, besonders bevorzugt 100 m²/g bis 250 m²/g, in Mengen von 5 bis 150 Gew.-Teilen, jeweils bezogen auf 100 Teile Kautschuk, eingesetzt werden.

Die genannten Füllstoffe können alleine oder im Gemisch eingesetzt werden.

In einer besonders bevorzugten Ausführung können die Kautschukmischungen 10 bis 150 Gew.-Teile helle Füllstoffe, beispielsweise Kieselsäuren, gegebenenfalls zusammen mit 0 bis 100 Gew.-Teilen Ruß, sowie 1 bis 25 Gew.-Teile Organo(alkylpolyethersilan)der Formel I, jeweils bezogen auf 100 Gew.-Teile Kautschuk, enthalten.

Die Kautschukmischungen können 0,1 bis 50 Gew.-Teile, bevorzugt 2 bis 30 Gew.-Teile, besonders bevorzugt 3 bis 25 Gew.-Teile, polysulfidisches Organo(alkylpolyethersilan) der Formel I, jeweils bezogen auf 100 Gew.-Teile Kautschuk, enthalten.

Das polysulfidische Organo(alkylpolyethersilan)der Formel I kann sowohl in reiner Form als auch aufgezogen auf einen inerten organischen oder anorganischen Träger sowie vorreagiert mit einem organischen oder anorganischen Träger dem Mischprozeß zugegeben werden. Bevorzugte Trägermaterialien können gefällte oder pyrogene Kieselsäuren, Wachse, Thermoplaste, natürliche oder synthetische Silikate, natürlich oder synthetische Oxide, speziell Aluminiumoxid oder Ruße sein. Desweiteren kann das polysulfidische Organo(alkylpolyethersilan)der Formel I auch vorreagiert mit dem einzusetzenden Füllstoff dem Mischprozeß zugegeben werden.

Die Kautschukmischungen können zusätzlich Silikonöl und/oder Alkylsilan enthalten.

Die erfindungsgemäßen Kautschukmischungen können weitere bekannte Kautschukhilfsmittel, wie zum Beispiel Vernetzer, Vulkisationsbeschleuniger, Reaktionsbeschleuniger, - verzögerer, Alterungsschutzmittel, Stabilisatoren, Verarbeitungshilfsmittel, Weichmacher, Wachse oder Metalloxide enthalten, sowie ggf. Aktivatoren, wie Triethanolamin oder Hexantriol.

Weitere Kautschukhilfsstoffe können sein:
Polyethylenglykol oder/und Polypropylenglykol oder/und Polybutylenglykol mit Molgewichten zwischen 50 und 50.000 g/mol, bevorzugt zwischen 50 und 20.000 g/mol, besonders bevorzugt zwischen 200 und 10.000 g/mol, ganz besonders bevorzugt zwischen 400 und 6.000 g/mol, außerordentlich bevorzugt zwischen 500 und 3.000 g/mol,
kohlenwasserstoffterminiertes Polyethylenglykol Alk'-O-(CH₂-CH₂-0)_{YI}-H bzw. Alk'-(CH₂-CH₂-O)_{yI}-Alk',
kohlenwasserstoffterminiertes Polypropylenglykol Alk'-O-(CH₂-CH(CH₃)-0)_{YI}-H bzw. Alk'-O-(CH₂-CH(CH₃)-O)_{yI}-Alk',
kohlenwasserstoffterminiertes Polybutylenglykol Alk'-O-(CH₂-CH₂-CH₂-CH₂-O)_{yI}-H, Alk'-O-(CH₂-CH(CH₃)-CH₂-O)_{yI}-H, Alk'-O-(CH₂-CH₂-CH₂-CH₂-O)_{yI}-Alk' oder Alk'-O-(CH₂-CH(CH₃)-CH₂-O)_{yI}-Alk',
mit y^{I} im Mittel 2-25, bevorzugt 2-15, besonders bevorzugt 3-8 und 10-14, ganz besonders bevorzugt 3-6 und 10-13, und Alk gleich ein verzweigter oder unverzweigter, unsubstituierter oder substituierter, gesättigter oder ungesättigter Kohlenwasserstoff mit 1 bis 35, bevorzugt 4 bis 25, besonders bevorzugt 6 bis 20, ganz besonders bevorzugt 10 bis 20, außerordentlich bevorzugt 11 bis 14, Kohlenstoffatomen,
polyethylenglykol-, polypropylenglykol-, polybutylenglykol-, oder mit Mischungen davon verethertes Neopentylglykol HO-CH₂-C(Me)₂-CH₂-OH, Pentaerythrit C(CH₂-OH)₄ oder Trimethylolpropan CH₃-CH₂-C(CH₂-OH)₃, wobei die Wiederholeinheiten von Ethylenglykol, Propylenglykol oder/und Butylenglykol in den veretherten Polyalkoholen zwischen 2 und 100, bevorzugt zwischen 2 und 50, besonders bevorzugt zwischen 3 und 30, ganz besonders bevorzugt zwischen 3 und 15, sein kann.

Zur Mittelwertberechnung von y^{I} kann die analytisch bestimmbare Menge an Polyalkylenglykoleinheiten zur analytisch bestimmbaren Menge an -Alk ins Verhältnis gesetzt werden [Menge Polyalkylenglykol-einheiten)/(Menge - Alk)]. Zur Bestimmung der Mengen kann zum Beispiel die ¹H-und ¹³C-Kernresonanzspektroskopie eingesetzt werden.

Die Kautschukhilfsmittel können in üblichen Mengen, die sich unter anderem nach dem Verwendungszweck richten, eingesetzt werden. Übliche Mengen können zum Beispiel Mengen von 0,1 bis 50 Gew.-%, bezogen auf Kautschuk, sein.

Als Vernetzer können Schwefel oder organische Schwefelspender eingesetzt werden.

Die erfindungsgemäßen Kautschukmischungen können weitere Vulkanisationsbeschleuniger enthalten. Beispiele können als geeignete Vulkanisationsbeschleuniger Mercaptobenzthiazole, Sulfenamide, Guanidine, Dithiocarbamate, Thioharnstoffe, Thiocarbonate sowie deren Zinksalze, wie z.B. Zinkdibutyldithiocarbamat, eingesetzt werden.

Die Vulkanisationsbeschleuniger und Schwefel können in Mengen von 0,1 bis 10 Gew.-%, bevorzugt 0,1 bis 5 Gew.-%, bezogen auf den eingesetzten Kautschuk, eingesetzt werden.

Die erfindungsgemäßen Kautschukmischungen können
(D) einen Thiuramsulfid- und/oder Carbamatbeschleuniger und/oder die entsprechenden Zinksalze,
(E) einen stickstoffhaltigen Co-Aktivator,
(F) gegebenenfalls weitere Kautschukhilfsmittel und
(G) gegebenenfalls weitere Beschleuniger
enthalten.

Ein weiterer Gegenstand der Erfindung ist ein Verfahren zur Herstellung der erfindungsgemäßen Kautschukmischungen, welches dadurch gekennzeichnet ist, daß man mindestens einen Styrol-Butadien-Kautschuk, mindestens einen Füllstoff und ein polysulfidisches Organo(alkylpolyethersilan)der Formel (I) mischt.

Die Zugabe des polysulfidischen Organo(alkylpolyethersilans)der allgemeinen Formel (I), sowie die Zugabe der Füllstoffe können bei Massetemperaturen von 100 bis 200 °C erfolgen. Sie kann jedoch auch bei tieferen Temperaturen von 40 bis 100 °C, zum Beispiel zusammen mit weiteren Kautschukhilfsmitteln, erfolgen.

Die Abmischung der Kautschuke mit dem Füllstoff, gegebenenfalls Kautschukhilfsmitteln und dem polysulfidischen Organo(alkylpolyethersilan)der allgemeinen Formel (I) kann in üblichen Mischaggregaten, wie Walzen, Innenmischern und Mischextrudern, durchgeführt werden. Üblicherweise können solche Kautschukmischungen in Innenmischern hergestellt werden, wobei zunächst in einer oder mehreren aufeinanderfolgenden thermomechanischen Mischstufen die Kautschuke, der Füllstoff, das polysulfidische Organo(alkylpolyethersilan)der allgemeinen Formel (I) und die Kautschukhilfsmittel bei 100 bis 170°C eingemischt werden. Dabei können sich die Zugabereihenfolge und der Zugabezeitpunkt der Einzelkomponenten entscheidend auf die erhaltenen Mischungseigenschaften auswirken. Üblicherweise kann die so erhaltene Kautschukmischung in einem Innenmischer oder auf einer Walze bei 40 bis 110°C mit den Vernetzungschemikalien versetzt werden und zur sogenannten Rohmischung für die nachfolgenden Prozeßschritte, wie zum Beispiel Formgebung und Vulkanisation, verarbeitet werden.

Die Vulkanisation der erfindungsgemäßen Kautschukmischungen kann bei Temperaturen von 80 bis 200 °C, bevorzugt 130 bis 180°C, gegebenenfalls unter Druck von 10 bis 200 bar erfolgen.

Die erfindungsgemäßen Kautschukmischungen können zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungselementen, wie zum Beispiel Dichtungsringe und Dämpfungselemente, verwendet werden.

Ein weiterer Gegenstand der Erfindung sind Formkörper, erhältlich aus der erfindungsgemäßen Kautschukmischung durch Vulkanisation.

Die erfindungsgemäßen Kautschukmischungen haben den Vorteil, dass die Alkoholemission während des Mischprozesses reduziert ist und sie eine verbesserte Bruchdehnung gegenüber bekannten polysulfidischen Polyethersilanen aufweisen.

### Beispiele

Das in den Beispielen verwendete Lutensol TO 5 der Firma BASF AG enthält ein Gemisch von unterschiedlich ethoxylierten, unterschiedlich verzweigten C13-Alkoholen. In dem Gemisch sind folgende Verbindungen
HO-(CH₂-CH₂O)₂-C₁₃H₂₇,
HO-(CH₂-CH₂O)₃-C₁₃H₂₇,
HO-(CH₂-CH₂O)₄-C₁₃H₂₇,
HO-(CH₂-CH₂O)₅-C₁₃H₂₇,
HO-(CH₂-CH₂O)₆-C₁₃H₂₇,
HO-(CH₂-CH₂O)₇-C₁₃H₂₇ und
HO-(CH₂-CH₂O)₈-C₁₃H₂₇
enthalten. Der durchschnittliche Ethoxylierungsgrad der C13-Alkohole beträgt 5.

### Vergleichsbeispiel 1:

### S_{2.15}[-C₃H₆-Si(OC₂H₅)[(O-CH₂-CH₂-)₂O-Et]₂]₂

In einem Kolben werden 300,3 g Bis(triethoxysilylpropyl)-disulfid (Si 266 der Firma Degussa AG) mit 337 g Diethylenglykolmonoethylether(der Firma Merck)und 0,51 g Ti(OBu)₄ gemischt. Die Mischung wird in einem Rotationsverdampfer unter reduziertem Druck auf 115°C erwärmt. Der Druck wird bei 115°C innerhalb von 240 min von 400 mbar auf 100 mbar reduziert und das entstehende Ethanol destillativ entfernt. Es werden 525,1 g Produkt erhalten. Das Produkt wird mit Kernresonanzspektroskopie untersucht. 64% aller Si-OR Gruppen sind Si-O[(O-CH₂-CH₂-)₂O-C₂H₅] Gruppen.

### Vergleichsbeispiel 2:

### S_{2.15}[-C₃H₆-Si(OC₂H₅)[(O-CH₂-CH₂-)₂O-C₆H₁₃]₂]₂

In einem Kolben werden 72,9 g Bis(triethoxysilylpropyl)-disulfid (Si 266 der Firma Degussa AG) mit 116,2 g Diethylenglykolmonohexylether(der Firma Merck)und 0,13 g Ti(OBu)₄ gemischt. Die Mischung wird in einer Destillationsapparatur unter reduziertem Druck auf 120°C erwärmt. Der Druck wird bei 120°C innerhalb von 240 min von 300 mbar auf 75 mbar reduziert und das entstehende Ethanol destillativ entfernt. Es werden 159 g Produkt erhalten. Das Produkt wird mit Kernresonanzspektroskopie untersucht. 67% aller Si-OR Gruppen sind Si-O[(O-CH₂-CH₂-)₂O-C₆H₁₃] Gruppen.

### Vergleichsbeipiel 3:

### S_{3,75}[-C₃H₆-Si(OC₂H₅)[(O-CH₂-CH₂-)₂O-Et]₂]₂

In einem Kolben werden 300,2 g Bis(triethoxysilylpropyl)-tetrasulfid (Si 69 der Firma Degussa AG) mit 303,2 g Diethylenglykolmonoethylether (der Firma Merck) und 0,5 g Ti(OBu)₄ gemischt. Die Mischung wird in einem Rotationsverdampfer unter reduziertem Druck auf 115°C erwärmt. Der Druck wird bei 115°C innerhalb von 330 min von 400 mbar auf 75 mbar reduziert und das entstehende Ethanol destillativ entfernt. Es werden 499,4 g Produkt erhalten. Das Produkt wird mit Kernresonanzspektroskopie untersucht. 65% aller Si-OR Gruppen sind Si-O[(O-CH₂-CH₂-)₂O-C₂H₅] Gruppen.

### Vergleichsbeispiel 4:

### S_{3,75}[-C₃H₆-Si((O-CH₂-CH₂-)₃-O-CH₃)₃]₂

In einem Kolben werden 200,8 g Bis(triethoxysilylpropyl)-tetrasulfid (Si 69 der Firma Degussa AG) mit 371,2 g Triethylenglykolmonomethylether (der Firma Merck) und 0,42 g Ti(OBu)₄ gemischt. Die Mischung wird in einem Rotationsverdampfer unter reduziertem Druck auf 120°C erwärmt. Der Druck wird bei 120°C innerhalb von 300 min von 300 mbar auf 75 mbar reduziert und das entstehende Ethanol destillativ entfernt.

### Vergleichsbeispiel 5:

### S_{2,15}[-C₃H₆-Si((O-CH₂-CH₂-)₃-O-C₄H₉)₃]₂

In einem Kolben werden 200 g Bis(triethoxysilylpropyl)-disulfid (Si 266) mit 522 g Triethylenglykol-monobutylether und 0,41 g Ti(OBu)₄ gemischt. Die Mischung wird in einem Rotationsverdampfer unter reduziertem Druck auf 120°C erwärmt. Der Druck wird bei 120°C innerhalb von 300 min von 300 mbar auf 75 mbar reduziert und das entstehende Ethanol destillativ entfernt.

### Beispiel 1:

### S₂,₁₅{-C₃H₆-Si(OC₂H₅)_{2,5}[(O-CH₂-CH₂-)₅O-C₁₃H₂₇]_{0,5}}2

In einem Kolben werden 959 g Bis(triethoxysilylpropyl)-disulfid (Si 266 der Firma Degussa AG) mit 848 g Lutensol TO5 (der Firma BASF AG) und 0,96 g Ti(OBu)₄ gemischt. Die Mischung wird in einer Destillationsapparatur unter reduziertem Druck auf 140°C erwärmt. Der Druck wird bei 140°C innerhalb von 420 min von 500 mbar auf 25 mbar reduziert und das entstehende Ethanol destillativ entfernt.

Es werden 1712 g Produkt isoliert. Das Produkt wird mit Kernresonanzspektroskopie untersucht und entspricht der Formel S_{2,15}{-C₃H₆-Si(OC₂H₅)_{2,5}[(O-CH₂-CH₂-)₅O-C₁₃H₂₇]_{0,5}}₂.

### Beispiel 2:

### S_{2,15}{-C₃H₆-Si(OC₂H₅)[(O-CH₂-CH₂-)₅O-C₁₃H₂₇]₂]₂

In einem Kolben werden 360 g Bis(triethoxysilylpropyl)-disulfid (Si 266 der Firma Degussa AG) mit 1272 g Lutensol TO5 (der Firma BASF AG) und 0,4 g Ti(OBu)₄ gemischt. Die Mischung wird in einer Destillationsapparatur unter reduziertem Druck auf 140°C erwärmt. Der Druck wird bei 140°C innerhalb von 390 min von 500 mbar auf 50 mbar reduziert und das entstehende Ethanol destillativ entfernt.

Es werden 1490 g Produkt isoliert. Das Produkt wird mit Kernresonanzspektroskopie untersucht und entspricht der Formel S_{2,15}{-C₃H₆-Si(OC₂H₅)[(O-CH₂-CH₂-)₅O-C₁₃H₂₇]₂}₂.

### Beispiel 3:

### S_{3,75}{-C₃H₆-Si(OC₂H₅)_{2,5}[(O-CH₂-CH₂-)₅O-C₁₃H₂₇] _{0,5}}_{2 2}

In einem Kolben werden 300,2 g Bis(triethoxysilylpropyl)-tetrasulfid (Si 69 der Firma Degussa AG) mit 240 g Lutensol TO5 (der Firma BASF AG) und 0,44 g Ti(OBu)₄ gemischt. Die Mischung wird in einer Destillationsapparatur unter reduziertem Druck auf 130°C erwärmt. Der Druck wird bei 130°C innerhalb von 180 min von 150 mbar auf 25 mbar reduziert und das entstehende Ethanol destillativ entfernt.

Es werden 511 g Produkt isoliert. Das Produkt wird mit Kernresonanzspektroskopie untersucht und entspricht der Formel S₃,₇₅{-C₃H₆-Si(OC₂H₅)₂,₅ [(O-CH₂-CH₂-)₅O-C₁₃H₂₇]_{0,5}}₂.

### Beispiel 4:

### S_{3,75}{-C₃H₆-Si(OC₂H₅)₂[(O-CH₂-CH₂-)₅O-C₁₃H₂₇]}₂

In einem Kolben werden 300,3 g Bis(triethoxysilylpropyl)-tetrasulfid (Si 69 der Firma Degussa AG) mit 479 g Lutensol TO5 (der Firma BASF AG) und 0,45 g Ti(OBu)₄ gemischt. Die Mischung wird in einer Destillationsapparatur unter reduziertem Druck auf 130°C erwärmt. Der Druck wird bei 130°C innerhalb von 180 min von 150 mbar auf 25 mbar reduziert und das entstehende Ethanol destillativ entfernt.

Es werden 725 g Produkt isoliert. Das Produkt wird mit Kernresonanzspektroskopie untersucht und entspricht der Formel S_{3,75}{-C₃H₆-Si(OC₂H₅)₂[(O-CH₂-CH₂-)₅O-C₁₃H₂₇]}₂.

### Beispiel 5:

### S_{3,75}{-C₃H₆-Si(OC₂H₅)[(O-CH₂-CH₂-)₅O-C₁₃H₂₇]₂}₂

In einem Kolben werden 300,3 g Bis(triethoxysilylpropyl)-tetrasulfid (Si 69 der Firma Degussa AG) mit 958,2 g Lutensol TO5 (der Firma BASF AG) und 0,46 g Ti(OBu)4 gemischt. Die Mischung wird in einer Destillationsapparatur unter reduziertem Druck auf 130°C erwärmt. Der Druck wird bei 130°C innerhalb von 240 min von 300 mbar auf 20 mbar reduziert und das entstehende Ethanol destillativ entfernt.

Es werden 1151 g Produkt erhalten. Das Produkt wird mit Kernresonanzspektroskopie untersucht und entspricht der Formel S_{3,75}{-C₃H₆-Si(OC₂H₅)[(O-CH₂-CH₂-)₅O-C₁₃H₂₇]₂}₂.

### Beispiel 6:

### Kautschukmischungen

Die für die Kautschukmischungen verwendete Rezeptur ist in der folgenden Tabelle 1 angegeben. Dabei bedeutet die Einheit phr Gewichtsanteile, bezogen auf 100 Teile des eingesetzten Rohkautschuks. Die Silane werden equimolar, das heißt, mit gleicher Stoffmenge dosiert. Die zugesetzte Schwefelmenge wird so dosiert, daß die Summe aus dieser Menge und dem freien Schwefel der Organosiliciumverbindung bei allen Mischungen gleich ist. Das allgemeine Verfahren zur Herstellung von Kautschukmischungen und deren Vulkanisate ist in dem Buch: "Rubber Technology Handbook", W. Hofmann, Hanser Verlag 1994 beschrieben.

Die Vergleichsbeispiele 1 bis 3 sind Alkylpolyethersilane, wie sie aus EP 1 285 926 bekannt sind. Die Silane der Mischungen 4 und 5 sind die Ausgangssilane zur Herstellung der Organo(alkylpolyethersilane)der Formel I, Si 69, ein Bis(triethoxysilylpropyl)tetrasulfid, und Si 266, ein Bis(triethoxysilylpropyl)disulfid, Handelsprodukte der Firma Degussa AG.

**Tabelle 1**

| Substanz | Mischung | Mischung | Mischung | Mischung | Mischung | Mischung | Mischung | Mischung | Mischung | Mischung |
|---|---|---|---|---|---|---|---|---|---|---|
| | 1 | 2 | 3 | 4 | 5 | 6 | 7 | 8 | 9 10 | |
| | Ref. | Ref. | Ref. | Ref. | Ref. | Bsp. | Bsp. | Bsp. | Bsp. | Bsp. |
| **1. Stufe** | [phr] | [phr] | [phr] | [phr] | [phr] | [phr] | [phr] | [phr] | [phr] | [phr] |
| Buna VSL 5025-1 | 96 | 96 | 96 | 96 | 96 | 96 | 96 | 96 | 96 | 96 |
| Buna CB 24 | 30 | 30 | 30 | 30 | 30 | 30 | 30 | 30 | 30 | 30 |
| Ultrasil 7000 GR | 80 | 80 | 80 | 80 | 80 | 80 | 80 | 80 | 80 | 80 |
| Vergleichsbsp. 1 | 10 | 0 | 0 | 0 | 0 | 0 | 0 | 0 | 0 | 0 |
| Vergleichsbsp. 2 | 0 | 12,7 | 0 | 0 | 0 | 0 | 0 | 0 | 0 | 0 |
| Vergleichsbsp. 3 | 0 | 0 | 10,6 | 0 | 0 | 0 | 0 | 0 | 0 | 0 |
| Si 69 | 0 | 0 | 0 | 6, 4 | 0 | 0 | 0 | 0 | 0 | 0 |
| Si 266 | 0 | 0 | 0 | 0 | 5,8 | 0 | 0 | 0 | 0 | 0 |
| Beispiel 1 | 0 | 0 | 0 | 0 | 0 | 10,3 | 0 | 0 | 0 | 0 |
| Beispiel 2 | 0 | 0 | 0 | 0 | 0 | 0 | 24 | 0 | 0 | 0 |
| Beispiel 3 | 0 | 0 | 0 | 0 | 0 | 0 | 0 | 10,9 | 0 | 0 |
| Beispiel 4 | 0 | 0 | 0 | 0 | 0 | 0 | 0 | 0 | 15,5 | 0 |
| Beispiel 5 | 0 | 0 | 0 | 0 | 0 | 0 | 0 | 0 | 0 | 24,6 |
| ZnO | 3 | 3 | 3 | 3 | 3 | 3 | 3 | 3 | 3 | 3 |
| Stearinsäure | 2 | 2 | 2 | 2 | 2 | 2 | 2 | 2 | 2 | 2 |
| Naftolen ZD | 10 | 10 | 10 | 10 | 10 | 10 | 10 | 10 | 10 | 10 |
| Vulkanox 4020 | 1,5 | 1,5 | 1, 5 | 1, 5 | 1, 5 | 1,5 | 1, 5 | 1, 5 | 1, 5 | 1, 5 |
| Protektor G 3108 | 1 | 1 | 1 | 1 | 1 | 1 | 1 | 1 | 1 | 1 |

| **2. Stufe** | | | | | | | | | | |
|---|---|---|---|---|---|---|---|---|---|---|
| Batch Stufe 1 | | | | | | | | | | |

| **3. Stufe** | [phr] | [phr] | [phr] | [phr] | [phr] | [phr] | [phr] | [phr] | [phr] | [phr] |
|---|---|---|---|---|---|---|---|---|---|---|
| Batch Stufe 2 | | | | | | | | | | |
| Vulkacit D | 2 | 2 | 2 | 2 | 2 | 2 | 2 | 2 | 2 | 2 |
| Vulkacit CZ | 1,5 | 1,5 | 1,5 | 1,5 | 1,5 | 1,5 | 1,5 | 1,5 | 1,5 | 1,5 |
| Perkacit TBzTD | 0,2 | 0,2 | 0,2 | 0,2 | 0,2 | 0,2 | 0,2 | 0,2 | 0,2 | 0,2 |
| Schwefel | 2,1 | 2,1 | 1,5 | 1,5 | 2,1 | 2,1 | 2,1 | 1,5 | 1,5 | 1,5 |

Bei dem Polymer VSL 5025-1 handelt es sich um ein in Lösung polymerisiertes SBR-Copolymer der Bayer AG, mit einem Styrolgehalt von 25 Gew.-% und einem Butadiengehalt von 75 Gew.-%. Das Copolymer enthält 37,5 phr Öl und weist eine Mooney-Viskosität (ML 1+4/100°C) von 50 auf.

Bei dem Polymer Buna CB 24 handelt es sich um ein cis-1,4-Polybutadien (Neodymtyp) der Bayer AG, mit cis-1,4-Gehalt von mindestens 96 % und einer Mooney-Viskosität von 44±5.

Ultrasil 7000 GR ist eine leicht dispergierbare Kieselsäure der Degussa AG und besitzt eine BET-Oberfläche von 170 m²/g.

Als aromatisches Öl wird Naftolen ZD der Chemetall verwendet, bei Vulkanox 4020 handelt es sich um PPD der Bayer AG und Protektor G3108 ist ein Ozonschutzwachs der Paramelt B.V.. Vulkacit D (DPG) und Vulkacit CZ (CBS) sind Handelsprodukte der Bayer AG. Perkacit TBzTD (Tetrabenzylthiuramtetrasulfid) ist ein Produkt von Flexsys N.V..

Die Kautschukmischungen werden in einem Innenmischer entsprechend der Mischvorschrift in Tabelle 2 hergestellt.

**Tabelle 2:**

| Stufe 1 | | |
|---|---|---|
| Einstellungen | | |
| Mischaggregat | | Werner & Pfleiderer E-Typ |
| Drehzahl | | 70 min⁻¹ |
| Stempeldruck | | 5,5 bar |
| Leervolumen | | 1,58 L |
| Füllgrad | | 0,58 |
| Durchflußtemp. | | 70 °C |
| Mischvorgang | | |
| 0 bis | 1 min | Buna VSL 5025-1 + Buna CB 24 |
| 1 bis | 2 min | 1/2 Kieselsäure, ZnO, Stearinsäure, Naftolen ZD, Kopplungsagens |
| | | |
| 2 bis | 3 min | 1/2 Kieselsäure, Vulkanox, |
| | 3 min | Säubern |
| 3 bis | 4 min | Mischen und ausfahren |
| | | |
| Batch-Temp. | | 140-150°C |
| Lagerung | | 24 h bei Raumtemperatur |

| Stufe 2 | | |
|---|---|---|
| Einstellungen | | |
| Mischaggregat | | Wie in Stufe 1 bis auf: |
| Drehzahl | | 80 min⁻¹ |
| Durchflußtemp. | | 80 °C |
| Füllgrad | | 0,56 |
| Mischvorgang | | |
| 0 bis | 2 min | Batch Stufe 1 aufbrechen |
| 2 bis | 3 min | Batchtemperatur 145°C durch Drehzahlvariation halten |
| | 3 min | Ausfahren |
| | | |
| Batch-Temp. | | 140-150°C |
| Lagerung | | 4 h bei Raumtemperatur |

| Stufe 3 | | |
|---|---|---|
| Einstellungen | | |
| Mischaggregat | | wie in Stufe 1 bis auf |
| Drehzahl | | 40 min⁻¹ |
| Füllgrad | | 0,55 |
| Durchflußtemp. | | 50 °C |
| Mischvorgang | | |
| 0 bis | 2 min 2 min | Batch Stufe 2, Beschleuniger, ausfahren und auf Labormischwalzwerk Fell bilden (Durchmesser 200 mm, Länge 450 mm, Durchflußtemperatur 50°C) |
| | | |
| | | Homogenisieren: 5* links, 5* rechts einschneiden und 6* bei weitem Walzenspalt(6 mm)und 3* bei engem Walzenspalt(3 mm) Fell ausziehen. |
| | | |
| Batch-Temp. | | < 110°C |

In Tabelle 3 sind die Methoden für die Gummitestung zusammengestellt.

**Tabelle 3**

| Physikalische Testung | Norm/Bedingungen |
|---|---|
| ML 1+4, 100°C, 2. und 3. Stufe | DIN 53523/3, ISO 667 |
| Zugversuch am Ring, 23°C Zugfestigkeit(MPa) Bruchdehnung(%) | DIN 53504, ISO 37 |
| Viskoelastische Eigenschaften, 0 °C, 16 Hz, 50 N Vorkraft und 25 N Amplitudenkraft Komplexer Modul E*(MPa) | DIN 53 513, ISO 2856 |
| Goodrich-Flexometertest, 0,250 inch Hub, 25 min, 23 °C Kontakttemperatur(°C) Einstichtemperatur(°C) | DIN 53533, ASTM D 623 A |

**Tabelle 4**

| Rohmischungsdaten | Einheit | Mischung 1 Ref. | Mischung 2 Ref. | Mischung 3 Ref. | Mischung 4 Ref. | Mischung 5 Ref. | Mischung 6 Bsp. | Mischung 7 Bsp. | Mischung 8 Bsp. | Mischung 9 Bsp.. | Mischung 10 Bsp. |
|---|---|---|---|---|---|---|---|---|---|---|---|
| ML 1+4, 2. Stufe | [-] | 73 | 65 | 733 | 80 | 82 | 73 | 51 | 68 | 60 | 45 |
| ML 1+4, 2. Stufe | [-] | 63 | 55 | 67 | 71 | 69 | 62 | 46 | 60 | 55 | 41 |
| Vulkanisatdaten | Einheit | Mischung 1 Ref. | Mischung 2 Ref. | Mischung 3 Ref. | Mischung 4 Ref. | Mischung 5 Ref. | Mischung 6 Bsp. | Mischung 7 Bsp. | Mischung 8 Bsp. | Mischung 9 Bsp. | Mischung 10 Bsp. |
| Zugfestigkeit | [MPa] | 11,5 | 10,2 | 12,9 | 12,3 | 11,5 | 13,2 | 11,4 | 13,2 | 13,0 | 10,7 |
| Bruchdehnung | [%] | 350 | 360 | 370 | 355 | 355 | 400 | 475 | 410 | 435 | 445 |
| E* (0 °C) | [MPa] | 19,0 | 12,1 | 17,0 | 19,5 | 20,2 | 17,3 | 10,1 | 15,8 | 13,8 | 9,3 |
| Kontakttemperatur | [°C] | 64 | 57 | 63. | 68 | 65 | 62 | 54 | 64 | 61 | 54 |
| Einstichtemperatur | [°C] | 104 | 99 | 106 | 116 | 110 | 106 | 98 | 111 | 108 | 97 |

Wie man anhand der Tabelle 4 erkennen kann, besitzen alle erfindungsgemäßen Mischungen, Mischungen 6 bis 10, eine deutlich höhere Bruchdehnung gegenüber den Vergleichsbeispielen bei gleichzeitig vergleichbaren Zugfestigkeiten. Dies ist überraschend, da in den gummitechnischen Beispielen in EP 1 285 926 mit zunehmender Länge des Alkylrests Alk sich die Bruchdehnung verschlechtert. Außerdem werden ebenfalls höhere Bruchdehnungen als bei den in der Gummiindustrie gängigen Triethoxysilanen Si 69 oder Si 266 gefunden.

In einem weiteren Beispiel werden die Organo(alkylpolyethersilane)der Beispiele 2, 4 und 5 mit Silanen verglichen, wie sie aus JP 2002145890 bekannt sind. Dies sind die Vergleichsbeispiele 4 und 5. Die Rezeptur ist in Tabelle 5 angegeben und die Ergebnisse der gummitechnischen Untersuchungen in Tabelle 6.

**Tabelle 5**

| Substanz | Mischung 11 Ref. [phr] | Mischung 12 Ref. [phr] | Mischung 13 Bsp. [phr] | Mischung 14 Bsp. [phr] | Mischung 15 Bsp. [phr] |
|---|---|---|---|---|---|
| **1. Stufe** | | | | | |
| Buna VSL 5025-1 | 96 | 96 | 96 | 96 | 96 |
| Buna CB 24 | 30 | 30 | 30 | 30 | 30 |
| Ultrasil 7000 GR | 80 | 80 | 80 | 80 | 80 |
| Vergleichsbsp. 4 | 14,9 | 0 | 0 | 0 | 0 |
| Vergleichsbsp. 5 | 0 | 17,3 | 0 | 0 | 0 |
| Beispiel 2 | 0 | 0 | 24,0 | 0 | 0 |
| Beispiel 4 | 0 | 0 | 0 | 15,5 | 0 |
| Beispiel 5 | 0 | 0 | 0 | 0 | 24,6 |
| ZnO | 3 | 3 | 3 | 3 | 3 |
| Stearinsäure | 2 | 2 | 2 | 2 | 2 |
| Naftolen ZD | 10 | 10 | 10 | 10 | 10 |
| Vulkanox 4020 | 1,5 | 1,5 | 1,5 | 1,5 | 1,5 |
| Protektor G 3108 | 1 | 1 | 1 | 1 | 1 |
| **2. Stufe** | | | | | |

| Batch Stufe 1 | | | | | |
|---|---|---|---|---|---|
| **3. Stufe** | | | | | |
| Batch Stufe 2 | | | | | |
| Vulkacit D | 2 | 2 | 2 | 2 | 2 |
| Vulkacit CZ | 1,5 | 1,5 | 1,5 | 1,5 | 1,5 |
| Perkacit TBzTD | 0,2 | 0,2 | 0,2 | 0,2 | 0,2 |
| Schwefel | 1,5 | 2,1 | 2,1 | 1,5 | 1,5 |

**Tabelle 6**

| Rohmischungsdaten | Einheit | Mischung 11 Ref. | Mischung 12 Ref. | Mischung 13 Bsp. | Mischung 14 Bsp. | Mischung 15 Bsp. |
|---|---|---|---|---|---|---|
| ML 1+4, 2. Stufe | [-] | 65 | 60 | 50 | 58 | 47 |
| ML 1+4, 2. Stufe | [-] | 59 | 52 | 43 | 50 | 42 |
| Vulkanisatdaten | Einheit | Mischung 11 Ref. | Mischung 12 Ref. | Mischung 13 Bsp. | Mischung 14 Bsp. | Mischung 15 Bsp. |
| Zugfestigkeit | [MPa] | 10,9 | 10,6 | 11,0 | 12,8 | 10,6 |
| Bruchdehnung | [%] | 355 | 380 | 460 | 435 | 435 |
| E*(0 °C) | [MPa] | 15,1 | 11,0 | 9,7 | 13,7 | 9, 9 |
| Kontakttemperatur | [°C] | 61 | 53 | 54 | 62 | 54 |
| Einstichtemperatur | [°C] | 101 | 95 | 96 | 109 | 97 |

Auch hier erkennt man, daß die Mischungen mit den Organo(alkylpolyethersilanen) der Beispiele 2, 4 und 5 gegenüber den Vergleichsbeispielen signifikant höhere Bruchdehnungen aufweisen bei gleichzeitig vergleichbaren Zugfestigkeiten.

Die erfindungsgemäßen Kautschukmischungen mit den Organo(alkylpolyethersilanen) der Formel I zeigen also gegenüber Kautschukmischungen mit den bekannten Polyethersilanen deutlich verbesserte Bruchdehnungen.

## Patentansprüche

1. Kautschukmischungen, enthaltend
(A) mindestens einen Styrol-Butadien-Kautschuk,
(B) mindestens einen Füllstoff und
(C) mindestens ein polysulfidisches Organo(alkylpolyethersilan) der allgemeinen Formel I
[(X)(X')(X'')Si-R^{I}]₂-Sₘ I,
wobei
X eine Alkylpolyethergruppe O-((CR^{II}₂)_{w}-O-)ₜ Alk mit 14 - 29 Kohlenstoffatomen ist, t = 2-9 , w = 2-9,
R^{II} unabhängig voneinander H, eine Phenyl- oder eine Alkylgruppe ist,
Alk eine verzweigte oder unverzweigte, gesättigte oder ungesättigte, aliphatische, aromatische oder gemischt aliphatische /aromatische einbindige C₁₀-C₂₅-Kohlenwasserstoffgruppe ist,
X' ein verzweigtes oder unverzweigtes Alkyl,
ein verzweigtes oder unverzweigtes Alkoxy,
ein verzweigtes oder unverzweigtes C₂-C₂₅ Alkenyloxy-, ein C₆-C₃₅ Aryloxy-,
eine verzweigte oder unverzweigte C₇-C₃₅ Alkylaryloxygruppe,
eine verzweigte oder unverzweigte C₇-C₃₅ Aralkyloxygruppe oder ein X ist,
X'' ein verzweigtes oder unverzweigtes Alkyl,
ein verzweigtes oder unverzweigtes Alkoxy,
ein C₂-C₂₅ Alkenyloxy-,
ein C₆-C₃₅ Aryloxy-,
eine verzweigte oder unverzweigte C₇-C₃₅ Alkylaryloxygruppe,
eine verzweigte oder unverzweigte C₇-C₃₅ Aralkyloxygruppe oder ein X ist,
R^{I} eine verzweigte oder unverzweigte, gesättigte oder ungesättigte, aliphatische, aromatische oder gemischt aliphatische /aromatische zweibindige C₁-C₃₀ Kohlenwasserstoffgruppe, die gegebenenfalls substituiert ist,
m gleich 1-12 ist.

2. Kautschukmischungen gemäß Anspruch 1, **dadurch gekennzeichnet, daß** die polysulfidischen Organo(alkylpolyethersilane) ein Gemisch aus polysulfidischen Organo(alkylpolyethersilanen) der allgemeinen Formel I sind.

3. Kautschukmischungen gemäß Anspruch 1, **dadurch gekennzeichnet, daß** die polysulfidischen Organo(alkylpolyethersilane) auf einen inerten organischen oder anorganischen Träger aufgezogen oder mit einem organischen oder anorganischen Träger vorreagiert sind.

4. Kautschukmischungen gemäß Anspruch 1, **dadurch gekennzeichnet, daß** diese
(D) einen Thiuramsulfid- und/oder Carbamatbeschleuniger und/oder die entsprechenden Zinksalze,
(E) einen stickstoffhaltigen Co-Aktivator,
(F) gegebenenfalls weitere Kautschukhilfsmittel und
(G) gegebenenfalls weitere Beschleuniger
enthalten.

5. Verfahren zur Herstellung der Kautschukmischungen gemäß den Ansprüchen 1 bis 4, **dadurch gekennzeichnet, daß** man mindestens einen Styrol-Butadien-Kautschuk, mindestens einen Füllstoff und ein polysulfidisches Organo(älkylpolyethersilan) der Formel (I) mischt.

6. Verwendung von Kautschukmischungen gemäß den Ansprüchen 1 bis 4 zur Herstellung von Formkörpern.

7. Verwendung von Kautschukmischungen gemäß den Ansprüchen 1 bis 4 in Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

## Claims

1. Rubber mixtures, comprising
(A) at least one styrene-butadiene rubber,
(B) at least one filler and
(C) at least one polysulphidic organo(alkyl polyether silane) of the general formula I
[(X)(X')(X'')Si-R^{I}]₂-Sₘ I
where
X is an alkyl polyether group O-((CR^{II}₂)_{w}-O-)ₜAlk having from 14 to 29 carbon atoms, t = from 2 to 9, w = from 2 to 9,
R^{II} is, each independently of the other, H, a phenyl group or an alkyl group,
Alk is a branched or unbranched, saturated or unsaturated, aliphatic, aromatic or mixed aliphatic/aromatic monovalent C₁₀-C₂₅-hydrocarbon group,
X' is branched or unbranched alkyl,
branched or unbranched alkoxy,
a branched or unbranched C₂-C₂₅ alkenyloxy group,
a C₆-C₃₅ aryloxy group,
a branched or unbranched C₇-C₃₅ alkylaryloxy group,
a branched or unbranched C₇-C₃₅ aralkyloxy group or an X,
X'' is branched or unbranched alkyl,
branched or unbranched alkoxy,
a C₂-C₂₅ alkenyloxy group,
a C₆-C₃₅ aryloxy group,
a branched or unbranched C₇-C₃₅ alkylaryloxy group,
a branched or unbranched C₇-C₃₅ aralkyloxy group or an X,
R^{I} is a branched or unbranched, saturated or unsaturated, aliphatic, aromatic or mixed aliphatic/aromatic divalent C₁-C₃₀ hydrocarbon group, if appropriate having substitution,
m is from 1 to 12.

2. Rubber mixtures according to Claim 1, **characterized in that** the polysulphidic organo(alkyl polyether silanes) are a mixture composed of polysulphidic organo(alkyl polyether silanes) of the general formula I.

3. Rubber mixtures according to Claim 1, **characterized in that** the polysulphidic organo(alkyl polyether silanes) have been absorbed onto an inert organic or inorganic carrier or have been previously reacted with an organic or inorganic carrier.

4. Rubber mixtures according to Claim 1, **characterized in that** these comprise
(D) a thiuram sulphide accelerator and/or carbamate accelerator and/or the corresponding zinc salts,
(E) a nitrogen-containing co-activator,
(F) if appropriate, further rubber auxiliaries and
(G) if appropriate, further accelerators.

5. Process for preparation of the rubber mixtures according to Claims 1 to 4, **characterized in that** at least one styrene-butadiene rubber, and at least one filler and one polysulphidic organo(alkyl polyether silane) of the formula (I) are mixed.

6. Use of rubber mixtures according to Claims 1 to 4 for the production of mouldings.

7. Use of rubber mixtures according to Claims 1 to 4 in pneumatic tyres, in tyre treads, in cable sheathing, in hoses, in drive belts, in conveyor belts, in roll coverings, in tyres, in shoe soles, in sealing rings and in damping elements.

## Revendications

1. Compositions de caoutchouc, contenant
(A) au moins un caoutchouc styrène-butadiène,
(B) au moins une charge et
(C) au moins un organo(alkylpolyéthersilane) polysulfuré de formule générale I
[(X)(X')(X")-Si-R^{I}]₂-Sₘ
dans laquelle
X est un groupe alkylpolyéther O-((CR^{II}2)_{w}-O-)ₜAlk ayant de 14 à 29 atomes de carbone, t = 2-9, w = 2-9,
R^{II} représente, chacun indépendamment, H, un groupe phényle ou un groupe alkyle,
Alk est un groupe hydrocarboné à une liaison, en C₁₀-C₂₅ aliphatique, aromatique ou mixte aliphatique/aromatique, ramifié ou non ramifié, saturé ou insaturé,
X' est un groupe alkyle ramifié ou non ramifié,
un groupe alcoxy ramifié ou non ramifié,
un groupe alcényloxy en C₂-C₂₅ ramifié ou non ramifié,
un groupe aryloxy en C₆-C₃₅,
un groupe alkylaryloxy en C₇-C₃₅ ramifié ou non ramifié,
un groupe aralkyloxy en C₇-C₃₅ ramifié ou non ramifié ou un X,
X" est un groupe alkyle ramifié ou non ramifié,
un groupe alcoxy ramifié ou non ramifié,
un groupe alcényloxy en C₂-C₂₅,
un groupe aryloxy en C₆-C₃₅,
un groupe alkylaryloxy en C₇-C₃₅ ramifié ou non ramifié,
un groupe aralkyloxy en C₇-C₃₅ ramifié ou non ramifié ou un X,
R^{I} est un groupe hydrocarboné à deux liaisons en C₁-C₃₀ ramifié ou non ramifié, saturé ou insaturé, aliphatique, aromatique ou mixte aliphatique/aromatique, qui est éventuellement substitué,
m est égal à 1-12.

2. Compositions de caoutchouc selon la revendication 1, **caractérisées en ce que** les organo(alkylpolyéthersilane)s polysulfurés sont un mélange d'organo(alkylpolyéthersilane)s polysulfurés de formule générale I.

3. Compositions de caoutchouc selon la revendication 1, **caractérisées en ce que** les organo(alkylpolyéthersilane)s polysulfurés sont appliqués sur un support organique ou inorganique inerte ou sont mis à réagir au préalable avec un support organique ou inorganique.

4. Compositions de caoutchouc selon la revendication 1, **caractérisés en ce qu'**elles contiennent
(D) un accélérateur carbamate et/ou sulfure de thiurame et/ou les sels de zinc correspondants,
(E) un co-activateur azoté,
(F) éventuellement d'autres adjuvants pour caoutchouc et
(G) éventuellement d'autres accélérateurs.

5. Procédé pour la préparation des compositions de caoutchouc selon les revendications 1 à 4, **caractérisé en ce qu'**on mélange au moins un caoutchouc styrène-butadiène, au moins une charge et un organo(alkylpolyéthersilane) polysulfuré de formule (I).

6. Utilisation des compositions de caoutchouc selon les revendications 1 à 4, pour la fabrication de corps moulés.

7. Utilisation des compositions de caoutchouc selon les revendications 1 à 4, dans des pneumatiques à air, des bandes de roulement de pneumatiques, des gaines de câbles, des tuyaux souples, des courroies d'entraînement, des bandes transporteuses, des revêtements de cylindres, des pneumatiques, des semelles de chaussures, des rondelles d'étanchéité et des éléments amortisseurs.
